Europäisches Patentamt

European Patent Office

Office européen des brevets

(19)

(11) **EP 1 265 238 A2**

(12) **EUROPEAN PATENT APPLICATION**

(43) Date of publication:
**11.12.2002 Bulletin 2002/50**

(51) Int Cl.7: **G11B 20/00**

(21) Application number: **02012355.0**

(22) Date of filing: **05.06.2002**

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **06.06.2001 JP 2001171298**

(71) Applicant: **MATSUSHITA ELECTRIC INDUSTRIAL
CO., LTD.
Kadoma-shi, Osaka 571-8501 (JP)**

(72) Inventors:
• **Ohmori, Motoji
  Osaka-fu 573-0071 (JP)**
• **Futa, Yuichi
  Osaka-shi, Osaka-fu 534-0002 (JP)**
• **Tatebayashi, Makoto
  Hyogo-ken 665-0852 (JP)**

(74) Representative: **Grünecker, Kinkeldey,
Stockmair & Schwanhäusser Anwaltssozietät
Maximilianstrasse 58
80538 München (DE)**

(54) **Rental system for a playback device**

(57)     At the time of manufacturing a DVD to be provided to a rental agent, provider device 20 writes agent-rental expiry END2 along with a contents onto the DVD. At the time of renting the DVD to a user, rental agent device 30 writes user-expiry END1 onto the DVD. DVD player 40 acquires current time NOW form time source device 50, and compares current time NOW with each of prior time OLD, agent-rental expiry END2, and user-rental expiry END1. Only when playback conditions are met, DVD player 40 plays back the content.

FIG.1

1   Rental System

EP 1 265 238 A2

**Description**

This application is based on an application No. 2001-171298 filed in Japan, the content of which is hereby incorporated by reference.

BACKGROUND OF THE INVENTION

(1) Field of the Invention

The present invention relates to a rental system for renting digital works to users.

(2) Description of the Related Art

Rental services of recording mediums, such as DVDs and VHS tapes, storing prerecorded movies or music have been a thriving business, and the market is large and still growing.

In the case of renting VHS tapes, a VHS tape will eventually become unusable in rental services due to wear and tear on the tape occurring after being rented a certain number of times. On the contrary, in the case of renting digital recording mediums such as DVDs, the prerecorded information is in digital form, so that such a recording medium is usable semi-permanently.

Providers who provide those prerecorded recording mediums storing a digital work, such as a movie or music, demand that usage of a digital recording medium, such as a DVD, be restricted so as to prohibit semi-permanent usage of the digital work recorded thereon.

SUMMARY OF THE INVENTION

To meet the above demand, the present invention aims to provide a playback device, a provider device, a rental agent device, a rental system, a playback method, a recording medium, and a playback program each of which is capable of restricting the period during which a user is permitted to use a digital work upon renting the digital work to the user.

As described above, in one aspect of the present invention, a playback device for acquiring and playing back a rented digital work from a rental agent to a user, indulges : a time acquisition unit operable to acquire time information showing a reliable current time from a time source device; an expiry acquisition unit operable to acquire user-expiry information showing an expiry time of a period during which the user is permitted by the rental agent to play back the digital work; a comparison unit operable to compare the time shown by the acquired time information with the expiry time shown by the acquired user-expiry information; and a prohibition unit operable to prohibit playback of the digital work when the time shown by the time information is later than the expiry time shown by the user-expiry information.

With this construction, when the digital work is rented from the rental agent to the user, restriction is imposed on the period during which the user is permitted to use the digital work. Further, the playback device acquires the current time from the external time source device, which eliminates the need to provide a time generating circuit within the playback device.

Here, preferably, the digital work is provided from a provider to the rental agent, the expiry acquisition unit further acquires agent-expiry information showing an expiry time of a period during which the rental agent is permitted by the provider to rent the digital work, the comparison unit further compares the time shown by the acquired time information with the expiry time shown by the acquired agent-expiry information, and the prohibition unit prohibits playback of the digital work when the time shown by the time information is later than at least one of (i) the expiry time shown by the agent-expiry information, and (ii) the expiry time shown by the user-expiry information instead of when the time shown by the time information is later than the expiry time shown by the user-expiry information.

With this construction, the provider who provides the digital work to the rental agent substantially imposes a restriction on the period during which the rental agent is permitted to use the digital work in rental services.

Here, preferably, a rental recording medium storing the digital work along with the user-expiry information is provided from the rental agent to the user, the playback device acquires the digital work by reading the digital work from the rental recording medium, the expiry acquisition unit acquires the user-expiry information by reading the user-expiry information from the rental recording medium, and the prohibition unit prohibits playback of the digital work recorded on the rental recording medium.

With this construction, when the digital work recorded on the recording medium is rented from the rental agent to the user, a restriction is imposed on the period during which the user is permitted to use the digital work.

Here, preferably, the rental recording medium is a provider recording medium onto which the user-expiry information is additionally recorded by the rental agent, the provider recording medium being provided from a provider to the rental agent and storing the digital work along with agent-expiry information showing an expiry time of a period during which the rental agent is permitted by the provider to rent the digital work, the rental recording medium storing the digital work along with the agent-expiry information and the user-expiry information is provided from the rental agent to the user, the expiry acquisition unit further acquires the agent expiry information by reading the agent expiry information from the rental recording medium, the comparison unit further compares the time shown by the acquired time information with the expiry time shown by the acquired agent-expiry information, and the prohibition unit prohibits playback of the digital work when the time shown by the time information is later than at least one of (i) the expiry time shown by the agent-expiry information, and (ii) the expiry time shown by the user-expiry information instead of when the time shown by the time information is later than the expiry time shown by the user-expiry information.

With this construction, the provider who provides the digital work in the form of recording medium to the rental agent substantially imposes a restriction on the period during which the rental agent is permitted to use the digital work in rental services.

Here, preferably, the digital work is provided from the rental agent to the user along with the user-expiry information by being broadcasted in form of a broadcast wave, the playback device acquires the digital work by receiving the broadcast wave, extracting the digital work from the received broadcast wave, and storing the extracted digital work, the expiry acquisition unit acquires the user-expiry information by extracting the user-expiry information from the received broadcast wave, and the control unit prohibits playback of the stored digital work.

With this construction, the rental agent who provides the digital work in the form of carrier wave to the user imposes a restriction on the period within which the user is permitted to use the digital work.

Here, preferably, the digital work is provided from a provider to the rental agent along with agent-expiry information showing an expiry time of a period during which the rental agent is permitted by the provider to rent the digital work, the digital work is provided from the rental agent to the user by the rental agent broadcasting the digital work along with the user-expiry information and the agent-expiry information, the expiry acquisition unit further acquires the agent-expiry information by receiving the broadcast wave and extracting the agent-expiry information from the received broadcast wave, the comparison unit further compares the time shown by the acquired time information with the expiry time shown by the acquired agent-expiry information, and the prohibition unit prohibits playback of the digital work when the time shown by the time information is later than at least one of (i) the expiry time shown by the agent-expiry information, and (ii) the expiry time shown by the user-expiry information instead of when the time shown by the time information is later than the expiry time shown by the user-expiry information.

With this construction, the provider who provides the digital work to the rental agent substantially imposes a restriction on the period during which the rental agent is permitted to use the digital work in rental services.

Alternatively, in another aspect of the present invention, a provider device for use by a provider to provide a digital work to a rental agent, includes: an expiry generation unit operable to generate agent-expiry information showing an expiry time of a period during which the rental agent is permitted by the provider to rent the digital work; and an output unit operable to output the digital work along with the generated agent-expiry information.

With this construction, the agent expiry information is generated and outputted together with the digital work, so that the playback device is prohibited to play back the digital work later than the expiry time indicated by the agent expiry information has passed.

Alternatively, in another aspect of the present invention, a rental agent device for use by a rental agent to rent a digital work to a user, includes: an expiry generation unit operable to generate user-expiry information showing an expiry time of a period during which the user is permitted by the rental agent to play back the digital work; and an output unit operable to output the digital work along with the generated user-expiry information.

With this construction, the user expiry information is generated and outputted together with the digital work, so that the playback device is prohibited to play back the digital work later than the expiry time indicated by the user expiry information has passed.

BRIEF DESCRIPTION OF THE DRAWINGS

These and the other objects, advantages and features of the invention will become apparent from the following description there of taken in conjunction with the accompanying drawings which illustrate a specific embodiment of the invention.

In the drawings:

FIG. 1 is a block diagram showing the construction of rental system 1;
FIG. 2 is a block diagram showing the construction of provider device 20;
FIG. 3 shows the data structure of the DVD onto which provider device 20 has written information;
FIG. 4 is a block diagram showing the construction of rental agent device 30;
FIG. 5 shows the data structure of the DVD onto which rental shop device 30 has written information;
FIG. 6 is a block diagram showing the construction of DVD player 40;
FIG. 7 is a block diagram showing the construction of time source device 50 ;
FIG. 8 is a flowchart showing the operations of manufacturer device 10 ;
FIG. 9 is a flowchart showing the operations of provider device 20, and the operations are continued to FIG. 10;
FIG. 10 is a flowchart showing the operations of provider device, and the operations are constituted from FIG. 9 ;
FIG. 11 is a flowchart showing the operations of rental agent device 30;
FIG. 12 is a flowchart showing the operations of DVD player 40;

FIG. 13 is a flowchart showing, in detail, the operations of DVD player 40 for the playback processing of the content, and the operations are continued to FIG. 14 ;

FIG. 14 is a flowchart showing, in detail, the operations of DVD player 40 for the playback processing of the content, and the operations are continued from FIG. 13 ;

FIG. 15 is a flowchart showing the operations of DVD player 40 and time source device 50 for mutual authentication processing as well as key sharing processing;

FIG. 16 is a flowchart showing the operations of DVD player 40 for acquiring current time from time source device 50 ;

FIG. 17 is a flowchart showing the operations performed by control unit 403 for verification of three sets of signature data ;

FIG. 18 is a block diagram showing the construction of rental system 2 ;

FIG. 19 is a block diagram showing the construction of providing device 70 ;

FIG. 20 is a block diagram showing the construction of broadcasting device 75;

FIG. 21 is a block diagram showing the construction of billing device 80;

FIG. 22 is a block diagram showing the construction of time source device 85;

FIG. 23 is a block diagram showing the construction of receiving/storing device 90 ;

FIG. 24 is a flowchart showing the operations of providing device 70 ;

FIG. 25 is a flowchart showing the operations of broadcasting device 75 ;

FIG. 26 is a flowchart showing the operations of receiving/storing device 90, and the operations are continued to FIG. 27 ;

FIG. 27 is a flowchart showing the operations of receiving/storing device 90, and the operations are continued to FIG. 28 ;

FIG. 28 is a flowchart showing the operations of receiving/storing device 90, and the operations are continued to FIG. 29 ;

FIG. 29 is a flowchart showing the operations of receiving/storing device 90, and the operations are continued from FIG. 28 ;

FIG. 30 is a flowchart showing the operations of broadcasting device 75 performed in conjunction with time source device 85 for acquitting current-time;

FIG. 31 is a flowchart showing the operations of broadcasting device 75 and receiving/storing device 90 in the case the user-rental period is set by determining a fixed expiry date;

FIG. 32 is a flowchart showing the operations of billing device 80 and receiving/storing device 90 performed for the receiving/storing device 90 to acquire the user-rental period, and the operations are continued to FIG. 33; and

FIG. 33 is a flowchart showing the operations of billing device 80 and receiving/storing device 90 performed for the receiving/storing device 90 to acquire the user-rental period, and the operations are continued from FIG. 32.

DESCRIPTION OF THE PREFERRED EMBODIMENT

1. RENTAL SYSTEM 1

Hereinafter, description is given to rental system 1 according to a preferred embodiment of the present invention.

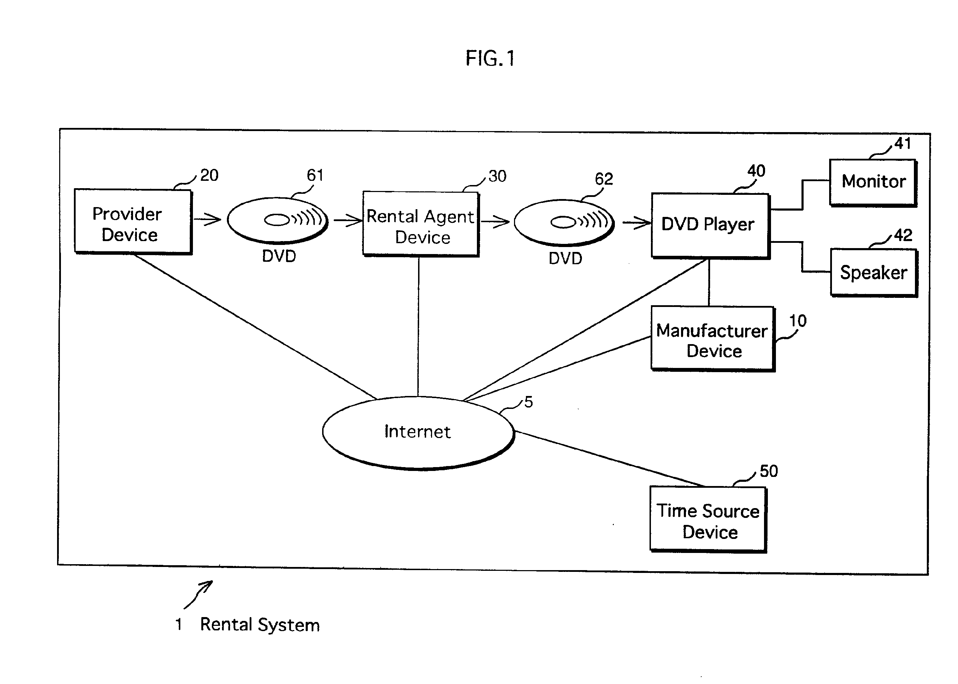

As shown in FIG. 1, rental system 1 is composed of manufacturer device 10, provider device 20, rental agent device 30, DVD player 40, monitor 41, and speaker 42, as well as time source device 50.

Manufacturer device 10, provider device 20, rental agent device 30, DVD player 40, and time source device 50 are connected via Internet 5.

Manufacturer device 10 is owned by the manufacturer of DVD player 40, and used by the manufacturer to write various types of information into DVD player 40.

Provider device 20 is owned by the provider who records a digital work such as a movie or music onto DVDs and provides those DVDs, and used to records such a digital work and other information onto DVDs.

Rental agent device 30 is owned by the rental agent who rents prerecorded DVDs storing a digital work such as a movie or music to an end user, and used to write information necessary in rental services onto the DVDs.

DVD player 40 plays back a digital work recoded on a DVD.

Time source device 50 generates and supplies current time.

1.1 Manufacturer Device 10

In order to write various types of information into DVD player 40, the manufacturer connects manufacturer device 10 to DVD player 40.

Manufacturer device 10 first generates a user identifier IDi that identifies a user i, and a random number. Manufacturer device 10 then performs an exclusive OR using the generated random number and the user identifier IDi to generate secret key SKi having 1,024 bits. Secret key SKi is a secret key for user i. Then, manufacturer device 10 writes user identifier IDi and secret key SKi into later-described information storage unit 405 included in DVD player 40.

Next, manufacturer device 10 generates public key PKi for user i from secret key SKi using public key generation algorithm PKEY. Here, one example of public key generation algorithm PKEY is shown below.

Let p denote a prime number being relatively large (1,024 bits), and then

$$PKi = g^{\{SKi\}} \bmod p$$

Here, $\alpha^{\{k\}}$ represents k*th* power of $\alpha$, and $\alpha$ mod p represents the remainder of $\alpha$ divided by p.

Next, manufacturer device 10 transmits the generated public key PKi to provider device 20 via Internet 5.

Further, manufacturer device 10 receives public key PKP and signature AUTHi, both of which will be described later, from provider device 20, and writes the received public key PKP and signature AUTHi into information storage unit 405 of DVD player 40.

1.2 Provider Device 20

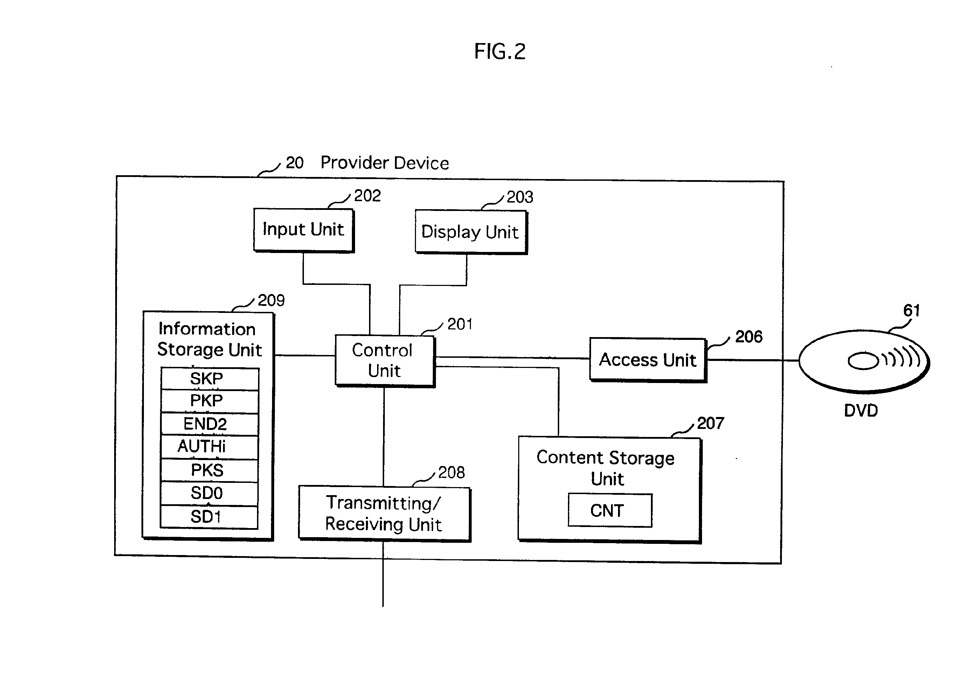

As shown in FIG. 2, provider device 20 is composed of control unit 201, input unit 202, display unit 203, access unit 206, content storage unit 207, transmitting/receiving unit 208, and information storage unit 209.

To be more specific, provider device 20 is a computer system composed of, for example, a microprocessor, ROM, RAM, a hard disc unit, a display unit, a keyboard, a mouse, a LAN unit, and a DVD access unit. The RAM or the hard disc unit used in the computer system stores a computer program and provider device 20 performs its function by the microprocessor operating in accordance with the computer program.

(1) Content Storage Unit 207

To be more specific, content storage unit 207 is composed of a hard disc unit, and prestores digital content CNT, such as music or movies.

(2) Information Storage Unit 209

To be more specific, information storage unit 209 is composed of a hard disc unit, and has memory areas for storing provider secret key SKP, provider public key PKP, agent-rental expiry END 2, signature AUTHi, rental agent public key PKS, signature SD0, and signature SD1.

(3) Transmitting/Receiving Unit 208

To be more specific, transmitting/receiving unit 208 is composed of a LAN unit, for example. Further, transmitting/receiving unit 208 is connected to Internet 5, and performs data transmission between control unit 201 and an external device connected to Internet 5.

(4) Access Unit 206

To be more specific, access unit 206 is composed of, for example, a DVD access unit that reads and writes information recorded on a DVD being mounted on provider device 20, and writes information on DVD 61 in accordance with instructions given from control unit 201.

(5) Control Unit 201

Control unit 201 generates a random number and perform an exclusive OR using an internally stored provider identifier that identifies a provider and the generated random number to generate secret key SKP having 1,024 bits. Secret key SKP is a secret key for the provider. Control unit 201 then writes the generated secret key SKP into information storage unit 209.

Next, control unit 201 generates public key PKP from the generated secret key SKP using public key generation algorithm PKEY. Public key PKP is a public key for the provider. Control unit 201 also writes the generated public key PKP into information storage unit 209.

Next, control unit 201 receives public key PKi from manufacturer device 10 via Internet 5 and transmitting/receiving unit 208, and applies digital signature generation algorithm SIG to user i public key PKi using secret key SKP as represented by expression 1 below to generate signature AUTHi. Control unit 201 then writes the generated signature AUTHi into information storage unit 209.

(Expression 1)

$$AUTHi = SIG(SKP, PKi)$$

Here, as shown in expression 1, "A = SIG(B, C)" means that digital signature generation algorithm SIG is applied to Information C using Key B so that Signature A is generated, and ditto for the following description. One example of digital signature generation algorithm SIG is the ElGamal signature algorithm. The details of ElGamal signature algorithm are found in "Introduction to Cryptographic Theory (*Ango-Riron Nyumon*)" (Eiji OKAMOTO, published by Kyoritsu Shuppan CO., LTD.)

Next, control unit 201 transmits the generated signature AUTHi to manufacturer device 10 via transmitting/receiving unit 208 and Internet 5.

Further, control unit 201 receives public key PKS from rental agent device 30 via Internet 5 and transmitting/receiving unit 208, and writes received public key PKS into information storage unit 209.

Control unit 201 repeats the operations described blow every time provider device 20 manufactures a DVD to be provided to the rental agent.

First, control unit 201 applies digital signature generation algorithm SIG to public key PKS using secret key SKP as represented by expression 2 bellow to generate signature SD1.

(Expression 2)

$$SD1 = SIG(SKP, PKS)$$

Next, control unit 201 reads digital content CNT stored in content storage unit 207, and generates agent-rental expiry END2 that is expiry of a period during which the rental agent is allowed to use the DVD in rental services. The rental agent is not allowed to rent the DVD after agent-rental expiry END2. Here, agent-rental expiry END2 is information representing a date in year, month, and day. Next, control unit 201 applies digital signature generation algorithm SIG to agent-rental expiry END2 using secret key SKP as represented by expression 3 below to generate signature SDO.

(Expression 3)

$$SD0 = SIG(SKP, END2)$$

Subsequently, control unit 201 writes via access unit 206 agent-rental expiry END2, signature SD0, and signature SD1 into a provider-only area of the DVD that is writable only to the provider, and digital content CNT into a free-access area of the DVD.

The provider-only area is a memory area only the provider is allowed to write information, and that is not writable to any other party. Here, the provider-only area is provided within a system area of the DVD.

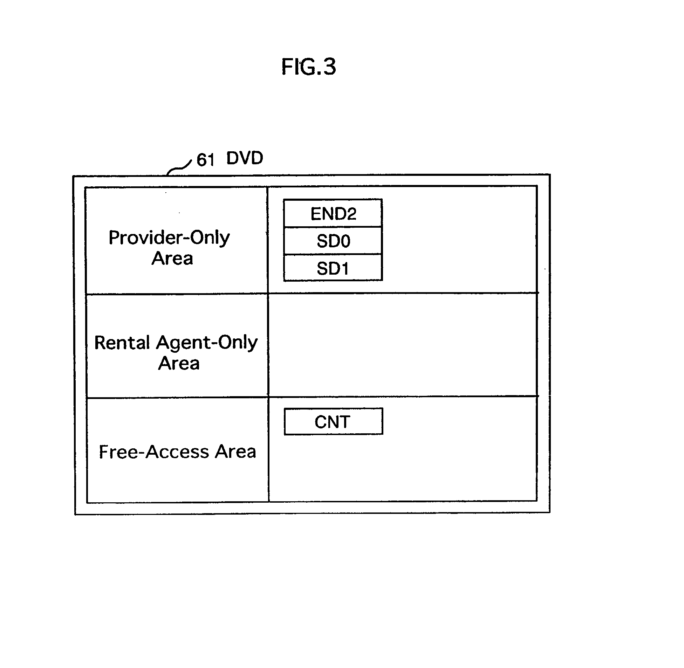

FIG. 3 shows the data structure of DVD onto which control unit 201 has written the information as above.

As shown in the figure, DVD 61 has the provider-only area, the rental agent-only area, and the free-access area. In the provider-only area, END2, SD0, and SD1 are recorded, and in the free-access area, CNT is recorded.

(6) Input Unit 202 and Display Unit 203

Input unit 202 receives an input from the provider, and display unit 203 displays information.

1.3 Rental Agent Device 30

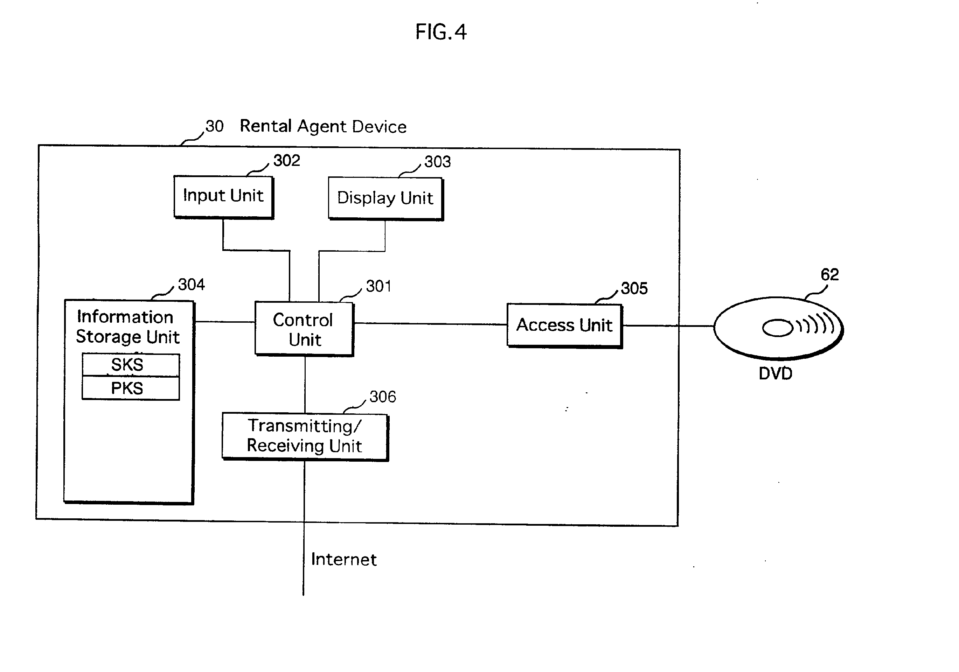

As shown in FIG. 4, rental agent device 30 is composed of control unit 301, input unit 302, display unit 303, information storage unit 304, access unit 305, and transmitting/receiving unit 306.

To be more specific and similarly to provider device 20, rental agent device 30 is a computer system composed of, for example, a microprocessor, ROM, RAM, a hard disc unit, a display unit, a keyboard, a mouse, a LAN unit, and a DVD access unit. The RAM or the hard disc unit used in the computer system stores a computer program, and rental agent device 30 performs its function by the microprocessor operating in accordance with the computer program.

(1) Information Storage Unit 304

To be more specific, information storage unit 304 is a hard disc unit, and has memory areas for storing rental agent secret key SKS and rental agent public key PKS.

(2) Transmitting/Receiving Unit 306

To be more specific, transmitting/receiving unit 306 is composed of a LAN unit, for example. Transmitting/receiving unit 306 is connected to Internet 5, and performs data transmission between control unit 301 and an external device connected to Internet 5.

(3) Access Unit 305

Access unit 305 is composed of, for example, a DVD access unit, and writes information on DVD 62 in accordance with instructions given from control unit 301.

(4) Control Unit 301

Control unit 301 generates a random number, and performs an exclusive OR using an internally stored rental agent identifier that identifies a rental agent and the generated random number to generate rental agent secret key SKS. Control unit 301 then writes the generated secret key SKS into information storage unit 304. Next, control unit 301 generates public key PKS from the generated secret key SKS using public key generation algorithm PKEY. Public key PKS is a public key for the rental agent. Control unit 301 also writes the generated public key PKS into information storage unit 304. Subsequently, control unit 301 transmits public key PKS to provider device 20 via transmitting/receiving unit 306 and Internet 5.

Next, control unit 301 repeats the operations described below every time the DVD is rented to an end user.

First, control unit 301 generates user-rental expiry END1. User-rental expiry END1 is information representing a date in year, month, and day representing expiry of a period within which the end user is allowed use the DVD. The end user is not allowed to use the DVD after user-rental expiry END1.

Next, control unit 301 applies digital signature generation algorithm SIG to user-rental expiry END 1 using secret key SKS as represented by expression 4 below to generate signature SD2.

(Expression 4)

$$SD2=SIG(SKS, END1)$$

Next, control unit 301 writes, via access unit 305, SD2 and END1 in the rental agent-only area of the DVD 62, and PKS in the free-access area.

The rental agent-only area is a memory area that only the rental agent is allowed to write information, and that is not writable to any other party. Here, the rental agent-only area is provided within a system area of the DVD.

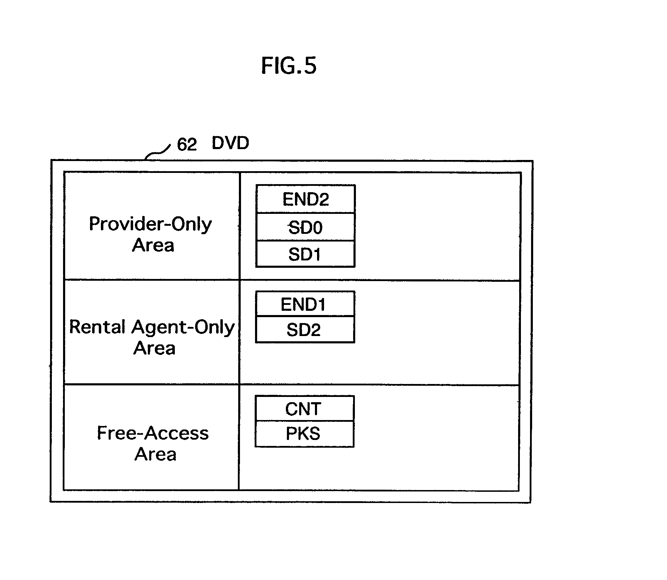

FIG. 5 shows the data structure of DVD 62 onto which control unit 301 has written information. As shown in the figure, in provider-only area, END2, SD0, and SD1 are recorded, in the rental agent-only area, END1 and END2 are recorded, and in the free-access area, CNT and PKS are recorded.

1.4 DVD Player 40

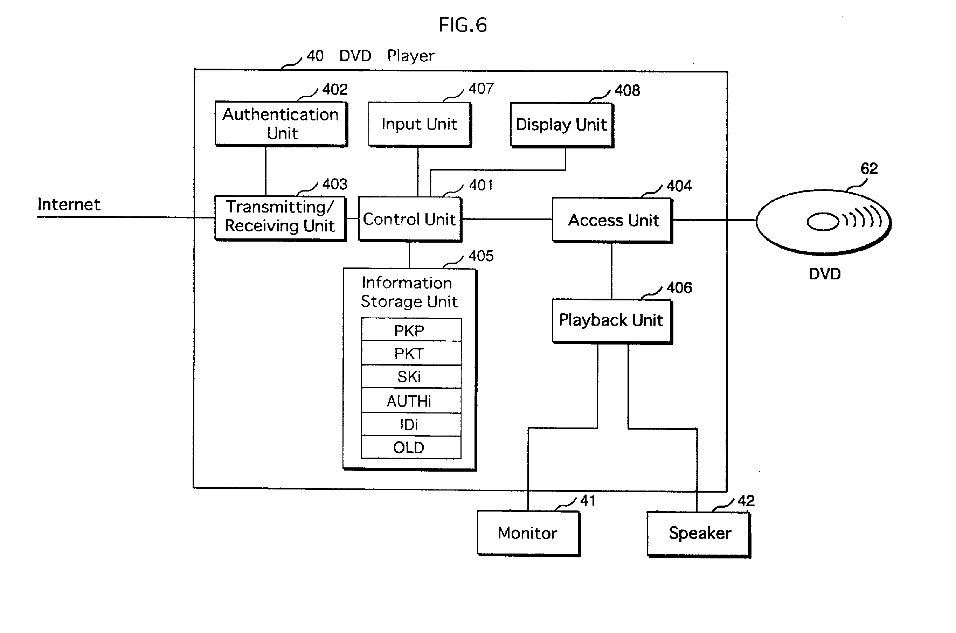

As shown in FIG. 6, DVD player 40 is composed of control unit 401, authentication unit 402, transmitting/receiving unit 403, access unit 404, information storage unit 405, playback unit 406, input unit 407, and display unit 408.

To be more specific and similarly to provider device 20, DVD player 40 is a computer system composed of, for example, a microprocessor, ROM, RAM, a playback unit, a LAN unit, a DVD access unit, and a liquid crystal display unit. The RAM used in the computer system stores a computer program. DVD player 40 performs its function by the microprocessor operating in accordance with the computer program.

(1) Information Storage Unit 405

To be more specific, information storage unit 405 is composed of RAM, and has memory areas for storing provider public key PKP, public key PKT of time source device 50, user i's secret key SKi, signature AUTHi, user i's identifier IDi, and prior time OLD.

As will be described later, public key PKP, secret key SKi, signature AUTHi, and user identifier IDi are written into DVD player 40 by manufacturer device 10.

Further, information storage unit 405 receives public key PKT from time source device 50.

(2) Transmitting/Receiving Unit 403

To be more specific, transmitting/receiving unit 403 is composed of, for example, a LAN unit. Transmitting/receiving unit 403 is connected to Internet 5, and performs data transmission between control unit 401 and an external device connected to Internet 5, or between authentication unit 402 and the external device.

(3) Access Unit 404

Access unit 404 is composed of, for example, a DVD access unit, and reads information from DVD 62 in accordance with instructions given from control unit 401.

(4) Control Unit 401

Control unit 401 instructs authentication unit 402 to perform processing for mutual authentication between DVD player 40 and time source device 50, and then receives the result of authentication. In the event that the authentication fails, control unit 401 terminates the processing.

In the event that the authentication is successful, control unit 401 operates as follows.

First, control unit 401 receives public key PKT of time source device 50 from time source device 50 via Internet 5 and transmitting/receiving unit 403, and writes the received PKT into information storage unit 405.

Next, control unit 401 receives via input unit 407 user operations instructing to play back the content recorded onto the DVD, and performs the following playback processing of the content. Upon receipt of user operations instructing to perform processing other than playback processing, control unit 401 performs the instructed processing.

On the other hand, upon receipt of user operations instructing the content playback, control unit 401 instructs authentication unit 402 to perform processing for mutual authentication between DVD player 40 and time source device 50 as well as processing for key sharing, followed by reception of the result of authentication. In the event that the authentication fails, control unit 401 outputs to display unit 408 the message indicating that the authentication has failed, and terminates the processing.

On the other hand, in the event that the authentication is successful, control unit 401 verifies the signature data as described below. Upon successfully verifying the signature data, control unit 401 acquires current time NOW also as described below. When failing to acquire current time NOW, control unit 401 outputs to display unit 408 the message indicating that acquisition has failed, and terminates the processing.

When current time NOW is successfully acquired, control unit 401 reads prior time OLD from information storage unit 405, and compares prior time OLD with current time NOW. When prior time OLD is equal to or later than current time NOW (OLD $\geq$ NOW), control unit 401 outputs to display unit 408 the message indicating that prior time OLD and current time NOW are in abnormal relation, and terminates the processing.

On the other hand, when prior time OLD is prior to current time NOW (OLD < NOW), control unit 401 reads user-rental expiry END1 from DVD 62, and compares current time NOW with user-rental expiry END1. When current time NOW is equal to or later than user-rental expiry END1, control unit 401 outputs to display unit 408 the message indicating that the user-rental period has expired, and terminates the processing.

When current time NOW is prior to user-rental expiry END1, control unit 401 reads agent-rental expiry END2 from DVD62, and compares current time NOW with agent-rental expiry END2. When current time NOW is equal to or later than agent-rental expiry END2, control unit 401 outputs to display unit 408 the message indicating that the agent-rental period has expired, transmits the message to provider device 20, and then terminate the processing.

When current time NOW is prior to agent-rental expiry END2, control unit 401 overwrite prior time OLD stored in information storage unit 405 with current time NOW.

Next, control unit 401 reads content CNT recorded in the free-access area of DVD 62 via access unit 404, and outputs the read content CNT to playback unit 406.

Further, control unit 401 receives current time NOW from time source device 50 in the following manner.

Here, description is given to processing for verification of signature data that control unit 401 performs.

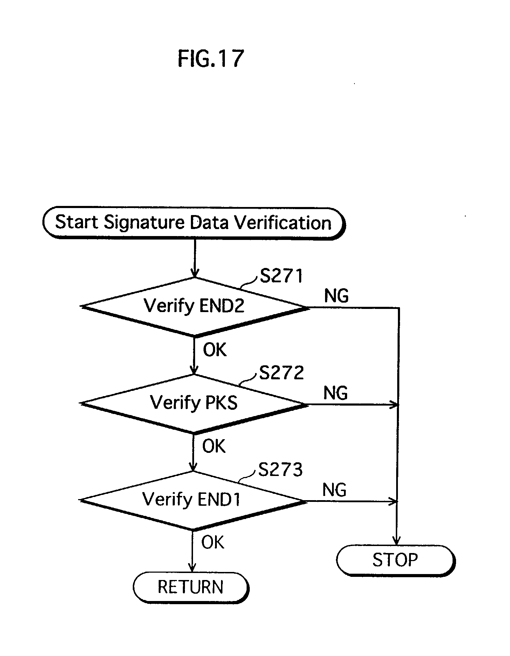

As shown in the flowchart in FIG. 17, control unit 401 verifies the following three sets of signature data.

(Signature Data Verification 1)

Control unit 401 reads provider public key PKP from information storage unit 405, and signature data SD0 from DVD 62. Control unit 401 then performs verification using provider public key PKP to verify that signature data SD0 is truly generated by the provider from END2.

VERIFY(PKP, SD, END2) (step S271)

(Signature Data Verification 2)

Control unit 401 read signature data SD1 from DVD 62, and performs verification using provider public key PKP to verify that signature data SD1 is truly generated from PKS by the provider.

VERIFY(PKP, SD1, PKS) (step S272)

(Signature Data Verification 3)

Control unit 401 reads rental agent public key PKS from DVD 62, and performs verification using rental agent public key PKS to verify that signature data SD2 is truly generated from END1 by the rental agent.

VERIFY(PKS, SD2, END1) (step S273)

When verification of any of the above three signatures fails (NG in any of the steps S271-S273), control unit 401 terminates the processing.

When verification of the above three signatures is all successful (OK in all of the steps S271-S273), control unit 401 continues the processing.

(5) Playback Unit 406

Playback unit 406 receives content CNT from the access unit 404, separates the received content CNT into voice data and image data, and outputs the voice data to speaker 42 and the image data to monitor 41.

(6) Input unit 407 and Display Unit 408

Input unit 407 accepts user input of information, and outputs the inputted information to control unit 401.

Display unit 408 receives a message from control unit 401 and displays the received message.

(6) Authentication Unit 402

Operations of authentication unit 402 is described later.

1.5 Time source Device 50

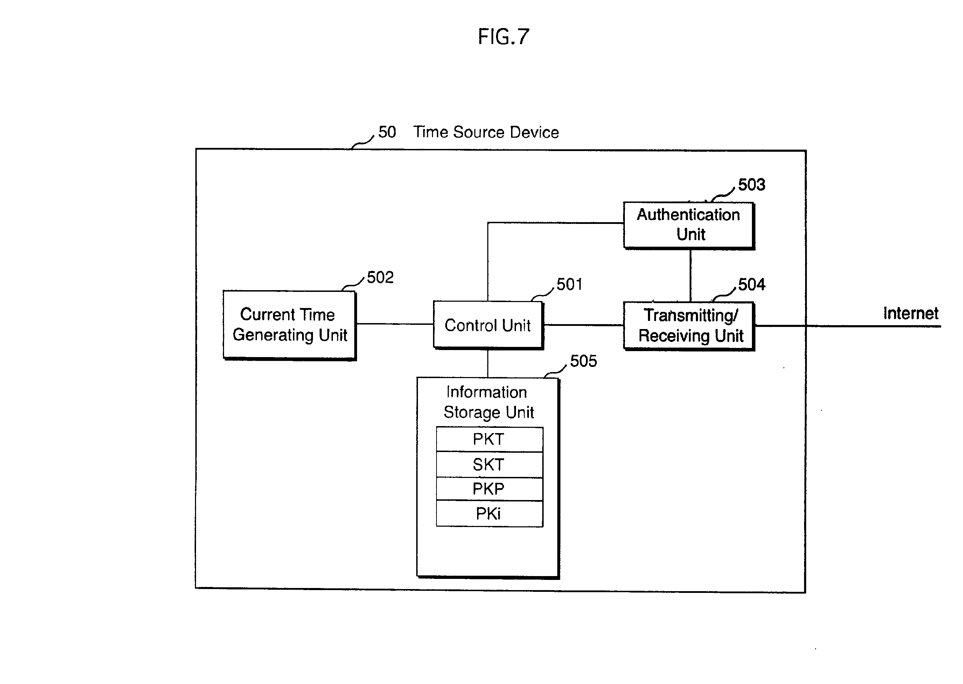

As shown in FIG. 7, time source device 50 is composed of control unit 501, current time generating unit 502, authentication unit 503, transmitting/receiving unit 504, and information storage unit 505.

To be more specific and similarly to provider device 20, time source unit 50 is a computer system composed of, for example, a microprocessor, ROM, RAM, a LAN unit, and a time generating circuit. The RAM used in the computer system stores a computer program. Time source device 50 performs its function by the microprocessor operating in accordance with the computer program.

(1) Information Storage Unit 505

To be more specific, information storage unit 505 is composed of RAM, and has memory areas for storing secret key SKT of time source device 50, public key PKT of time source device 50, provider public key PKP, and user i public key PKi.

## (2) Current Time Generating Unit 502

Current time generating unit 502 generates, whenever requested, current time NOW that represent the time of the current moment, and outputs the generated current time NOW to control unit 501. Current time NOW is composed of data representing year, month, day, hour, minute, and second.

## (3) Transmitting/Receiving Unit 504

To be more specific, transmitting/receiving unit 504 is composed of, for example, a LAN unit. Transmitting/receiving unit 504 is connected to Internet 5, and performs data transmission between control unit 501 and an external device connected to Internet 5 or between authentication unit 503 and the external device.

## (4) Control Unit 501 and Authentication Unit 503

The operations of control unit 501 and authentication unit 503 are described later.

### 1.6 Operations of Rental System 1

Now, description is given to the operations of rental system 1.

### (1) Operations of Manufacturer Device 10

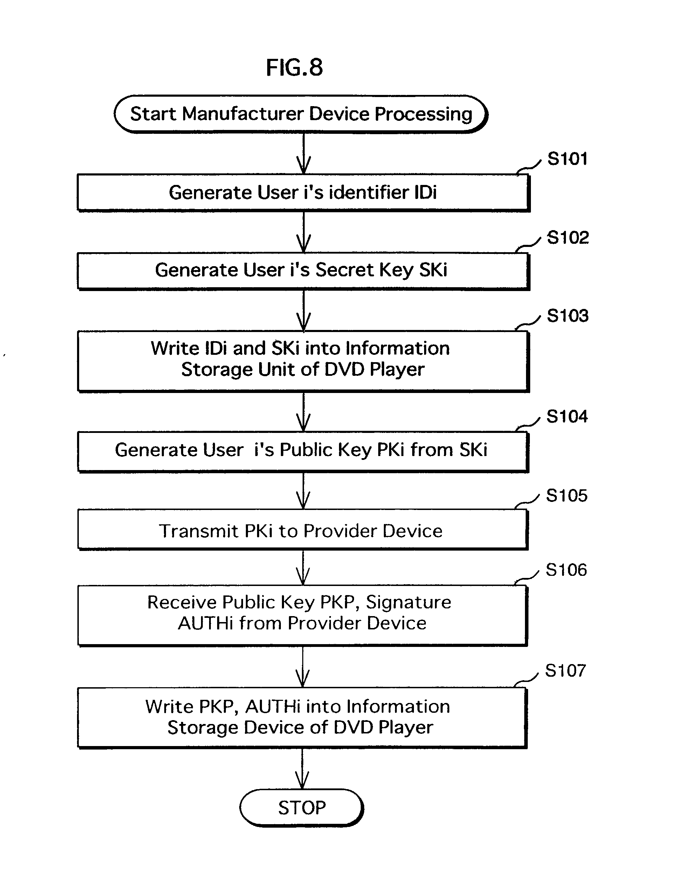

First, description is given to the operations of manufacturer device 10 with reference to the flowchart shown in FIG. 8.
At the time when the manufacturer writes various types of information into DVD player 40, manufacturer device 10 generates user identifier IDi identifying user i (step S101). Next, manufacturer device 10 generates a random number, and performs an exclusive OR using the generated random number and user identifier IDi to generate secret key SKi (step S102). Manufacturer device 10 then writes user identifier IDi and secret key SKi into information storage unit 405 of DVD player 40, which will be described later (step S103). Next, manufacturer device 10 generates user i public key PKi from secret key SKi using public key generation algorithm PKEY (step S104), and transmits the generated public key PKi to provider device 20 via Internet 5 (step S105).
Further, manufacturer device 10 receives from provider device 20 public key PKP and signature AUTHi both of which will be described later (step S106), and writes the received public key PKP and signature AUTHi into information storage unit 405 of DVD player 40 (step S107).

### (2) Operations of Provider Device 20

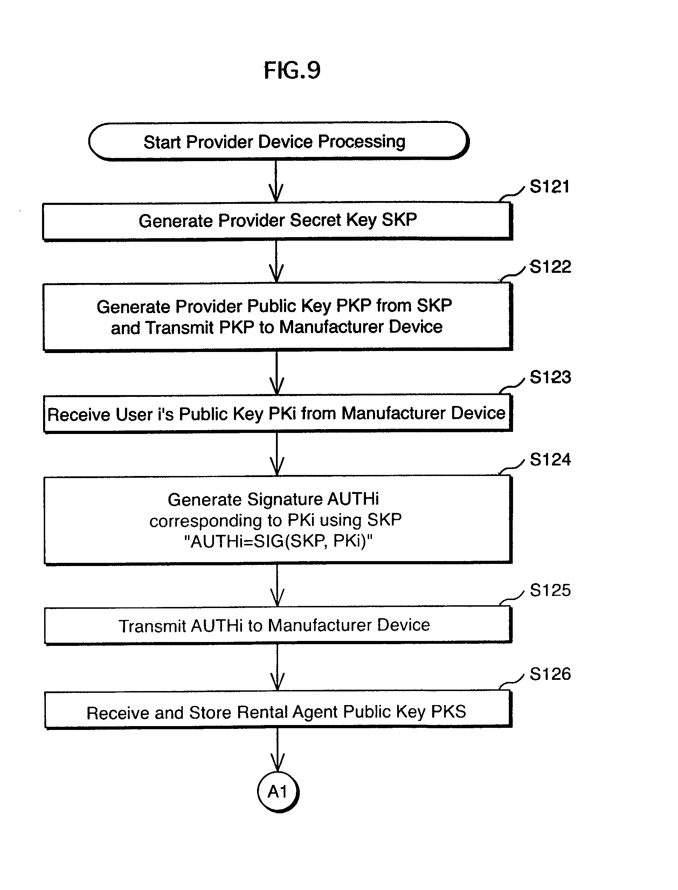

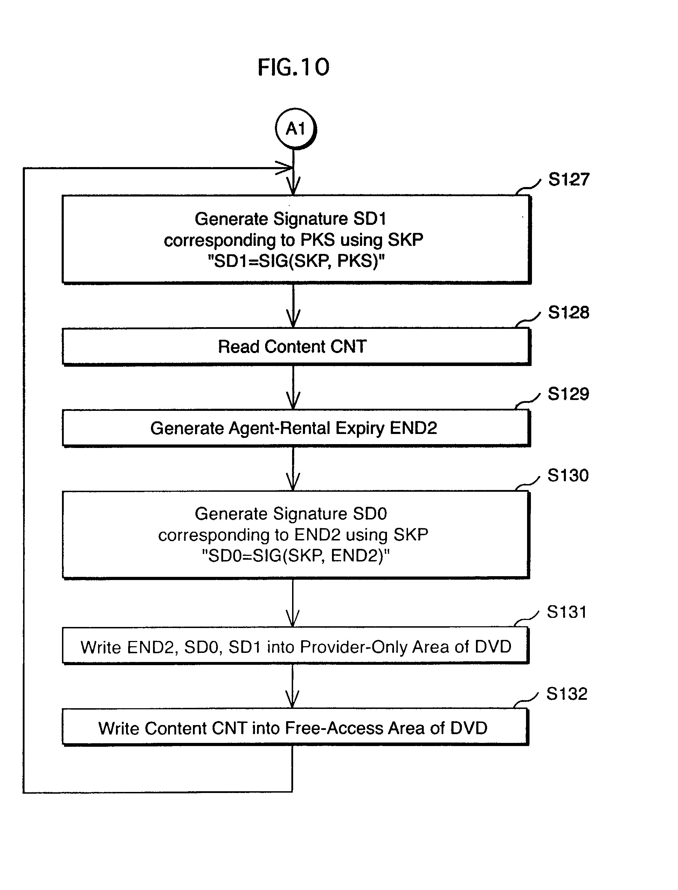

Description is given to operations of provider device 20 with reference to the flowchart shown in FIGs. 9 and 10.
Control unit 201 of provider device 20 generates a random number, and performs an exclusive OR using the provider identifier and the generated random number to generate secret key SKP (step S121). Next, control unit 201 applies public key generation algorithm PKEY to the generated secret key SKP to generate public key PKP, and then transmits the generated public key PKP to manufacturer device 10 (step S122).
Further, control unit 201 receives public key PKi from manufacturer device 10 (step S123), and applies digital signature generation algorithm SIG to user i public key PKi as represented by expression 1 to generate signature AUTHi. Control unit 201 then writes the generated signature AUTHi into information storage unit 209 (step S124), and transmits the generated signature AUTHi to manufacturer device 10 (step S125).
Next, control unit 201 receives public key PKS from rental agent device 30, and writes the received public key PKS into information storage unit 209 (step S126).
Control unit 201 repeats steps S127-S132 described below every time provider device 20 manufactures a DVD to be provided to the rental agent.
Control unit 201 applies digital signature generation algorithm SIG to public key PKS using secret key SKP as represented by expression 2 to generate signature SD1 (step S127).
Next, control unit 201 reads digital content CNT stored in content storage unit 207 (step S128), and generates agent-rental expiry END2 that is expiry of a period during which the rental agent is permitted to use the DVD in rental services (step S129). Control unit 201 then applies digital signature generation algorithm SIG to agent-rental expiry END2 as represented by expression 3 to generate signature SD0 (step S130).
Next, control unit 201 writes via access unit 206 agent-rental expiry END2, signature SD0, and signature SD1 into a provider-only area (i.e., of the DVD) that is writable only to the provider (step S131), as well as digital content CNT into the free-access area (step S132).

### (3) Operations of Rental Agent Device 30

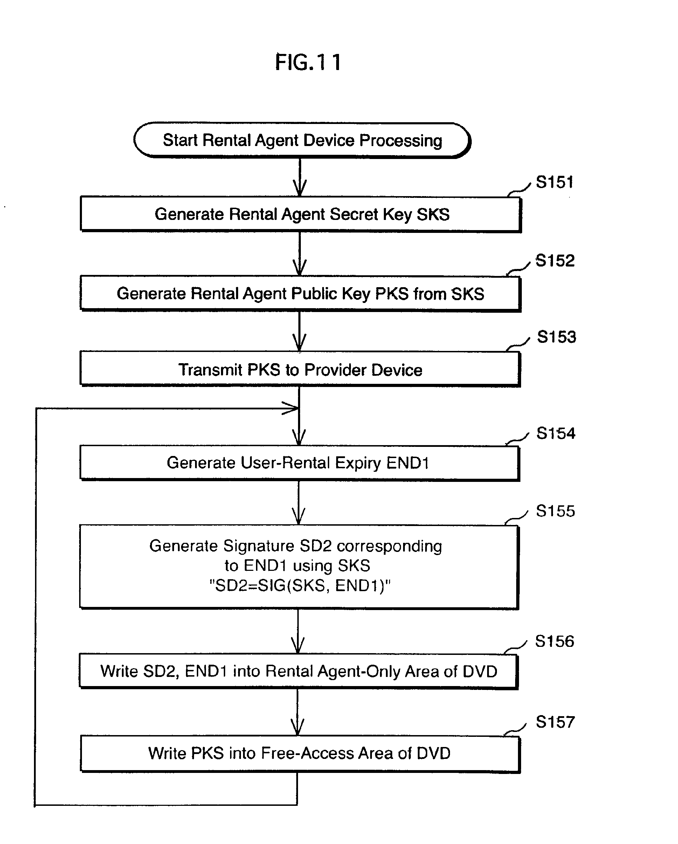

Now, description is given to the operations of rental agent device 30 with reference to the flowchart shown in FIG. 11.
Control unit 301 of rental agent device 30 generates a random number, performs an exclusive OR using the rental agent identifier and the generated random number to generate secret key SKS of rental agent, and writes the generated secret key SKS into information storage unit 304 (step S151). Next, control unit 301 applies public key generation algorithm PKEY to the generated secret key SKS to generate public key PKS, and writes the generated public key PKS into information storage unit 304 (step S152). Further, control unit 301 transmits the generated public key PKS to provider device 20 (step S153).

Thereafter, control unit 301 repeats steps S154-S157 described below every time the DVD is rented to an end user.

Control unit 301 generates user-rental expiry END1 representing expiry of a period during which the end user is permitted to use the DVD (step S154), and applies digital signature generation algorithm SIG to user-rental expiry END1 as represented by expression 4 to generate signature SD2 (step S155). Control unit 301 then writes via access unit 305 SD2 and END1 into the rental agent-only area provided on DVD 62 (step S156), while writing PKS into the free-access area (step S157).

(4) Operations of DVD Player 40

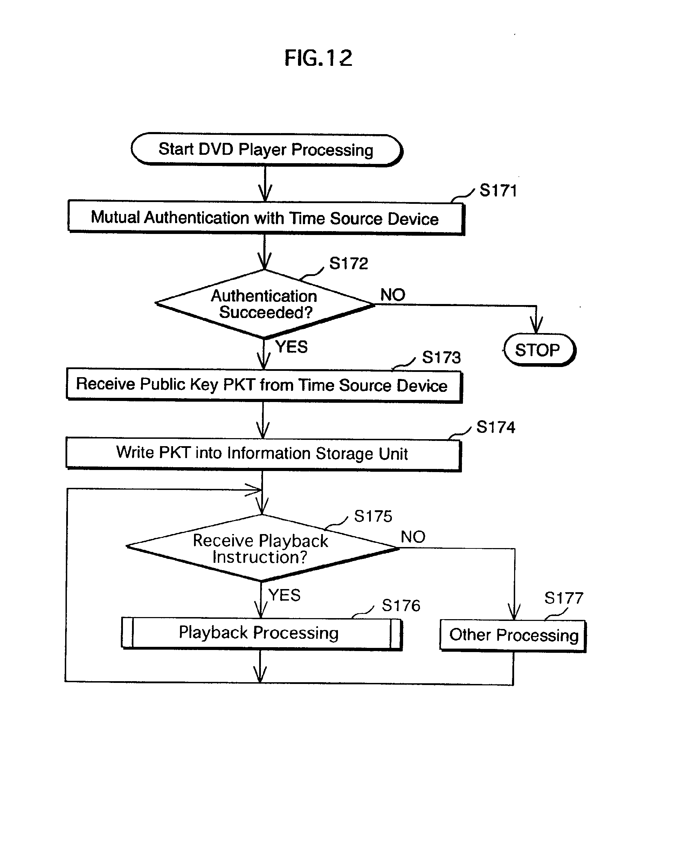

Now, description is given to the operations of DVD player 40 with reference to the flowchart shown in FIG. 12.

In response to the instruction given from control unit 401, authentication unit 402 performs processing for mutual authentication between DVD player 40 and time source device 50 (step S171). Control unit 401 receives the result of authentication and terminates the processing in the event that the authentication fails (step S172, NO).

On the other hand, in the event that the authentication is successful (step S172, YES), control unit 401 receives public key PKT of time source unit 50 from time source unit 50 (step S173), and then writes the received public key PKT into information storage unit 405 (step S174).

Upon receipt of user input that instructs other processing than playback processing of the content (step S175), control unit 401 performs the instructed processing (step S177) and goes back to step S175 to repeat the processing.

Upon receipt of user input instructing to play back the content recorded on the DVD (step S175), control unit 401 performs processing to play back the content (step S176), and then goes back to step S175 to repeat the processing.

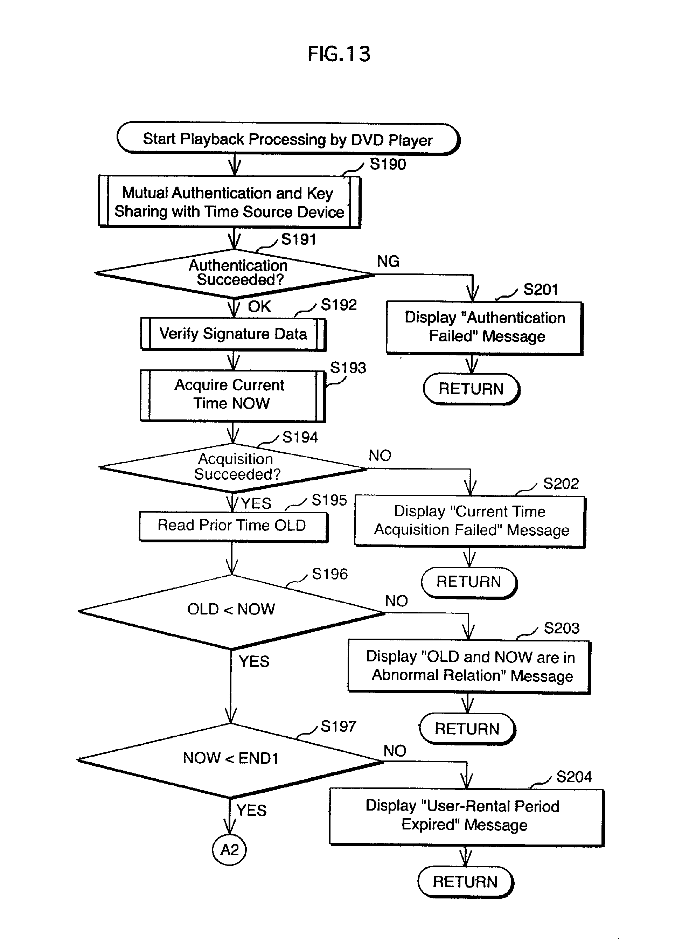

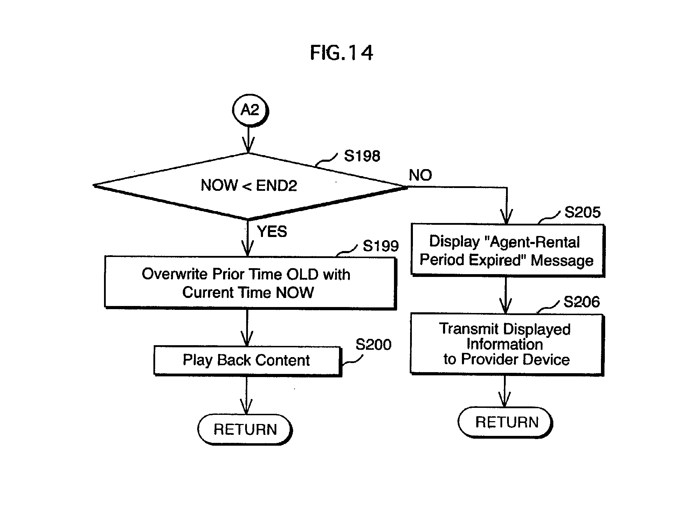

Now, description is given in detail to the playback processing performed in step S176 with reference to the flowchart shown in FIGs. 13 and 14.

In response to the instructions given from control unit 401, authentication unit 402 performs processing for mutual authentication between DVD as well as for key sharing between DVD player 40 and time source device 50 (step S190).

Control unit 401 then receives the result of authentication from authentication unit 402. Upon receiving the result that authentication has failed (step S191, NG), control unit 401 outputs the message indicating that the authentication has failed (step S201), and terminates the processing.

On the other hand, in the event that the authentication is successful (step S191, OK), control unit 401 verifies the signature data (step S192), and perform later-described processing for acquiring current time NOW from time source device 50 (step S193) provided that the signature data has been successfully verified. In the event that current time NOW is not acquired successfully (step S194, NO), control unit 401 outputs to display unit 408 the message indicating that the acquisition has failed (step S202), and terminates the processing.

On the other hand, in the even that the acquisition is performed successfully (step S194, YES), control unit 401 reads prior time OLD from information storage unit 405 (step S195), and compares prior time OLD with current time NOW (step S196). In the event prior time OLD is equal to or later than current time NOW (step S196, NO), control unit 401 outputs the message indicating that prior time OLD and current time NOW are in abnormal relation (step S203), and terminates the processing.

On the other hand, in the event that prior time OLD is prior to current time NOW (step 196, YES), control unit 401 reads user-rental expiry END1 from information storage unit 405, compares current time NOW with user-rental expiry END1 (step S197). In the event that current time NOW is equal to or later than user-rental expiry END1 (step S197, NO), control unit 401 outputs to display unit 408 the message indicating that the user-rental period has expired (step S204), and terminates the processing.

On the other hand, in the event that current time NOW is prior to user-rental expiry END1 (step S197, YES), control unit 401 reads agent-rental expiry END2 from information storage unit 405, and compares current time NOW with agent-rental expiry END2 (step S198). In the event that current time NOW is equal to or later than agent-rental expiry END2 (step S198, NO), control unit 401 outputs to display unit 408 the message indicating that agent-rental period has expired (step S205), transmits that message to provider device 20 (step S206), and terminates the processing.

On the other hand, in the event that current time NOW is prior to agent-rental expiry END2 (step S198, YES), control unit 401 overwrites prior time OLD stored in information storage unit 405 with current time NOW (step S199), reads the content from the free-access area of DVD 62 via access unit 404, and outputs the read content to playback unit 406 (step S200).

(5) Operations of DVD Player 40 and Time source Device 50 for Mutual Authentication Processing and Key Sharing Processing

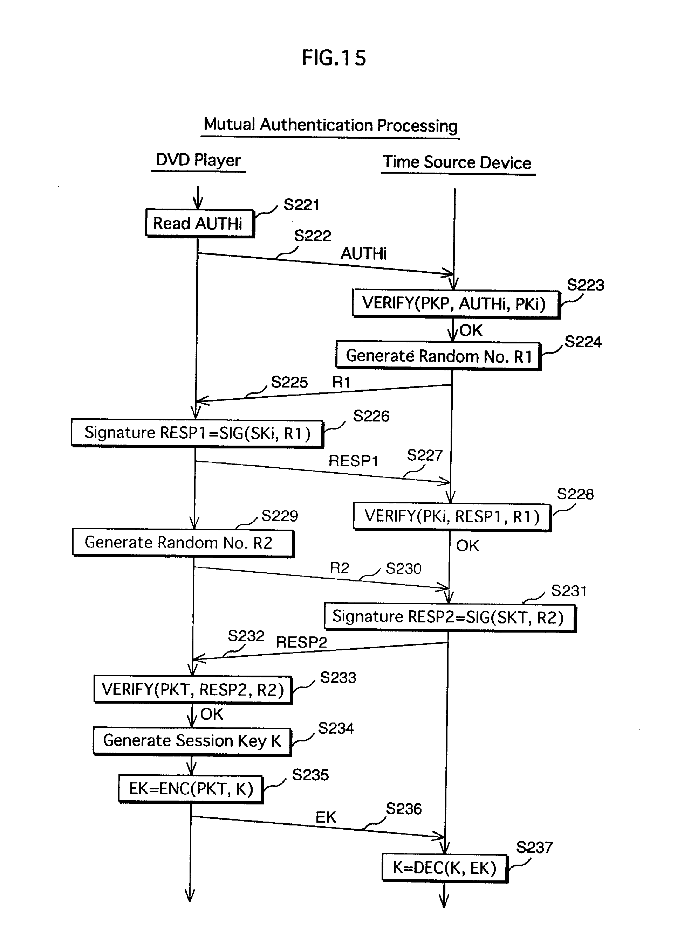

Now, description is given to operations of DVD player 40 and time source device 50 performed for the mutual authentication processing and the key sharing processing with reference to the flowchart shown in FIG. 15.

Authentication unit 402 of DVD player 40 reads signature AUTHi from information storage unit 405 via control unit 401 (step S221), and transmits to authentication unit 503 of time source device 50 the read signature AUTHi together with user i public key PKi via transmitting/receiving unit 403 and Internet 5 (step S222). Upon receipt of signature AUTHi and public key PKi, authentication unit 503 applies signature verification algorithm VERIFY to signature AUTHi using provider public key PKP to verify whether signature AUTHi is truly generated from PKi. Here, the verification operation is represented as VERIFY(PKP, AUTHi, PKi) (step S223).

In the event that verification is successful, authentication unit 503 generates random number R1 (step S224), transmits the generated random number R1 to authentication unit 402 via transmitting/receiving unit 504 and Internet 5 (step S225). Upon receipt of random number R1, authentication unit 402 applies digital signature generation algorithm SIG to the received random number R1 using secret key SKi to generate user i signature RESP1 (step S226), and transmits the generated signature RESP1 to authentication unit 503 via transmitting/receiving unit 403, Internet 5, and transmitting/receiving unit 504 (step S227).

Next, authentication unit 503 applies signature verification algorithm VERIFY to signature RESP1 using user i public key PKi to verify whether signature RESP1 is truly generated from random number R1. Here, the verification operation is represented as VERIFY(PKi, RESP1, R1) (step S228).

In the event that the verification is successful, authentication unit 402 generates random number R2 (step S229), transmits the generated random number R2 to authentication unit 503 via transmitting/receiving unit 403, Internet 5, and transmitting/receiving unit 504 (step S230). Upon receipt of random number R2, authentication unit 503 applies digital signature generation algorithm SIG to the received random number R2 using secret key SKT of time source device 50 to generate signature RESP2 of time source device 50 (step S231), and then transmits the generated RESP2 to authentication unit 402 via transmitting/receiving unit 504, Internet 5, and transmitting/receiving unit 403 (step S232).

Next, authentication unit 402 applies signature verification algorithm VERIFY using public key PKT of time source device 50 to verify whether signature RESP2 is truly generated from random number R2. Here, the verification operation is represented as VERIFY(PKT, RESP2, R2) (step S233).

Operations described up to this point are for mutual verification between DVD player 40 and time source device 50.

In the event that the mutual verification is successful, then, the processing goes onto the operations for key sharing.

In the key sharing processing, authentication unit 402 generates a random number, performs an exclusive OR using the generated random number and user identifier IDi to newly generate session key K (step S234), and applies encryption algorithm ENC to session key K using public key PKT of time source device 50 to generate ciphertext EK=ENC(PKT, K) (step S235). Next, authentication unit 402 transmits the generated ciphertext EK to authentication unit 503 via transmitting/receiving unit 403, Internet 5, and transmitting/receiving unit 504 (step S236). Upon receipt of ciphertext EK, authentication unit 503 applies decryption algorithm DEC to ciphertext EK using secret key SKT to decrypt session key K=DEC(SKT, EK) (step S237). Here, decryption algorithm DEC is an inversion of the above encryption algorithm ENC.

(6) Operations of DVD player 40 for Acquisition of Current Time from Time source Device 50

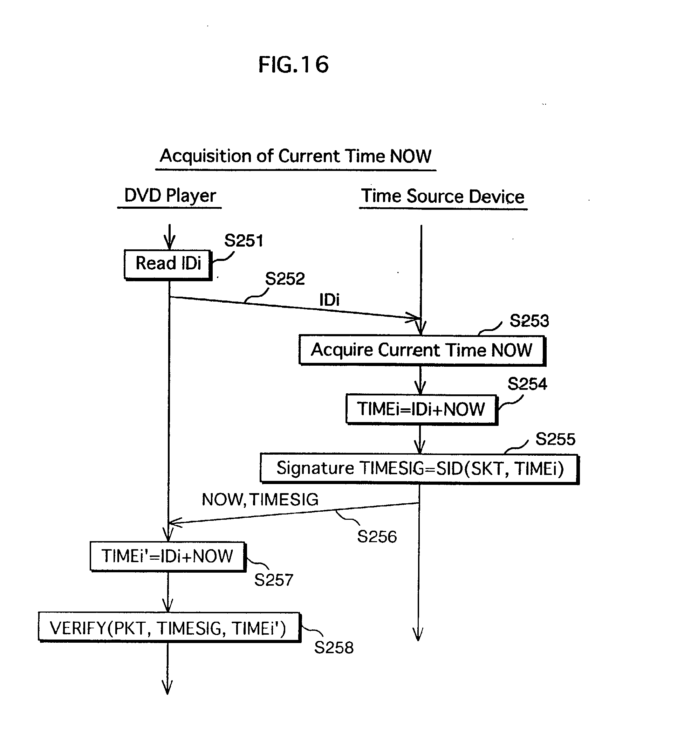

Now, description is given to operations performed by DVD player 40 for acquiring current time from time source device 50 with reference to the flowchart shown in FIG. 16.

Control unit 401 reads user identifier IDi from information storage unit 405 (step S251), and outputs the read user identifier IDi to control unit 501 via transmitting/receiving unit 403, Internet 5, and transmitting/receiving unit 504 (step S252).

Current time generating unit 502 generates and outputs current time NOW, and control unit 501 acquires current time NOW generated and outputted by current time generating unit 502 (step S253). Next, control unit 501 joins user identifier IDi and current time NOW in the stated order to generate user time TIMEi (step S254). Control unit 501 then applies digital signature generation algorithm SIG to user time TIMEi as represented by expression 5 below to generate signature TIMESIG (step S255).

(Expression 5)

$$TIMESIG = SIG(SKT, TIMEi)$$

Next, control unit 501 transmits current time NOW and signature TIMESIG to control unit 401 via transmitting/receiving unit 504, Internet 5, and transmitting/receiving unit 403, and control unit 401 receives the transmitted current time NOW and signature TIMESIG (step S256).

Here, control unit 401 joins user identifier IDi stored in information storage unit 405 and the received current time NOW in the stated order to generate user time TIMEi' (step S257). Control unit 401 then applies signature verification algorithm VERIFY to signature TIMESIG using public key PKT of time source device 50 as represented by expression 6 to verify that signature TIMESIG is truly generated from user time TIMEi by time source device 50 (step S258), and outputs the result of whether the verification is successful or not.

### 1.7 Overview

As has been described above, upon manufacturing a DVD to be supplied to the rental agent, provider device 20 writes agent-rental expiry END2 together with the content onto the DVD. In addition, upon renting the DVD to an end user, rental agent device 30 additionally writes user-rental expiry END1 onto the DVD. The user installs the DVD into DVD player 40 to play back the content. At this time, DVD player 40 acquires current time NOW from time source device 50, and compares the acquired current time NOW with prior time OLD, agent-rental expiry END2 and also with user-rental expiry END1 to determine whether to play back the content. DVD player 40 plays back the content only when conditions for playback are met.

### 2. RENTAL SYSTEM 2

Now, description is given to rental system 2 according to another preferred embodiment of the present invention.

BS digital broadcasters and 110-degree CS broadcasters have already started (1) data broadcasting related to broadcast programs, as well as (2) data broadcasting independent of broadcast programs. A set-top box for receiving such data broadcasting is composed of a large-capacity hard disc drive installed therein. Such a set-top box is referred to as eSTB and is provided with two tuners.

First tuner is similar to a conventional TV tuner, and receives, in response to user operations, broadcast programs on a channel that an end user desires to watch.

Second tuner is preset so as to receive only broadcast programs transmitted over one or more specific channels that are designated beforehand and are not allowed to be altered by end users. Specific data is broadcasted via those specific channels, and second tuner receives the specific data and is forced to store the received data into the hard disc.

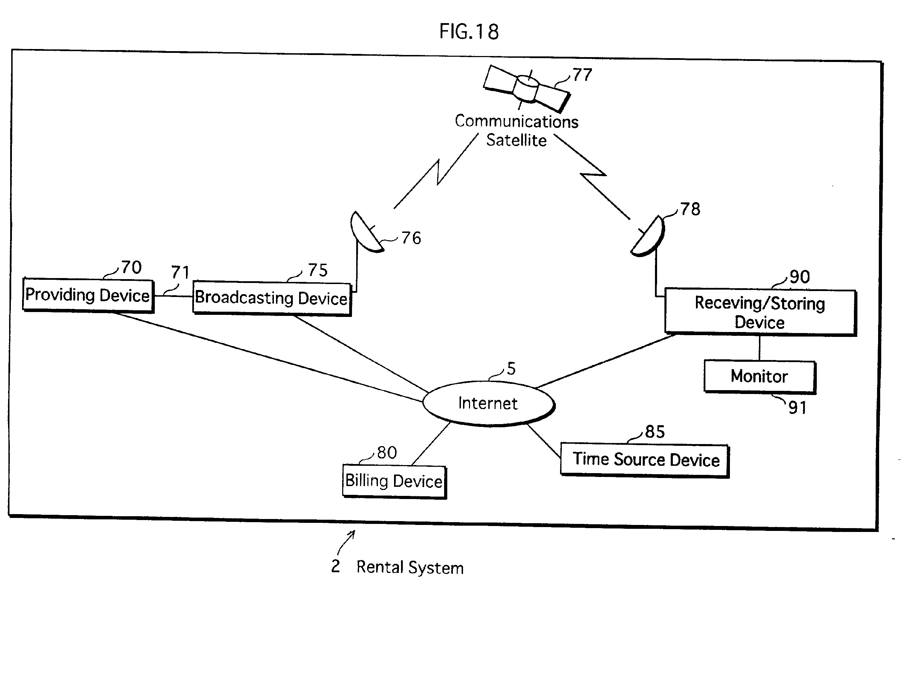

As shown in FIG. 18, rental system 2 is composed of providing device 70, broadcasting device 75, communications satellite 77, receiving/storing device 90, monitor 91, billing device 80, and time source device 85. Here, receiving/storing device 90 is eSTB.

Providing device 70, broadcasting device 75, billing device 80, and time source device 85 are operated under administration of a provider, a broadcaster, a billing agent, and a time source agent, respectively. Receiving/storing device 90 is for an end user to use.

Providing device 70 and broadcasting device 75 are connected with each other via communications line 71. In addition, providing device 70, broadcasting device 75, receiving/storing device 90, billing device 80, and time source device 85 are interconnected via Internet 5.

Providing device 70 provides a content to broadcasting device 75. Broadcasting device 75 broadcasts the content in the form of broadcast wave via communications satellite 77. Receiving/storing device 90 receives the broadcast wave and extracts the content from the received broadcast wave, and stores the extracted content. Thereafter, receiving/storing device 90 is permitted to output a digital work constituting the stored content to monitor 91 only during the rental period.

### 2.1 Providing device 70

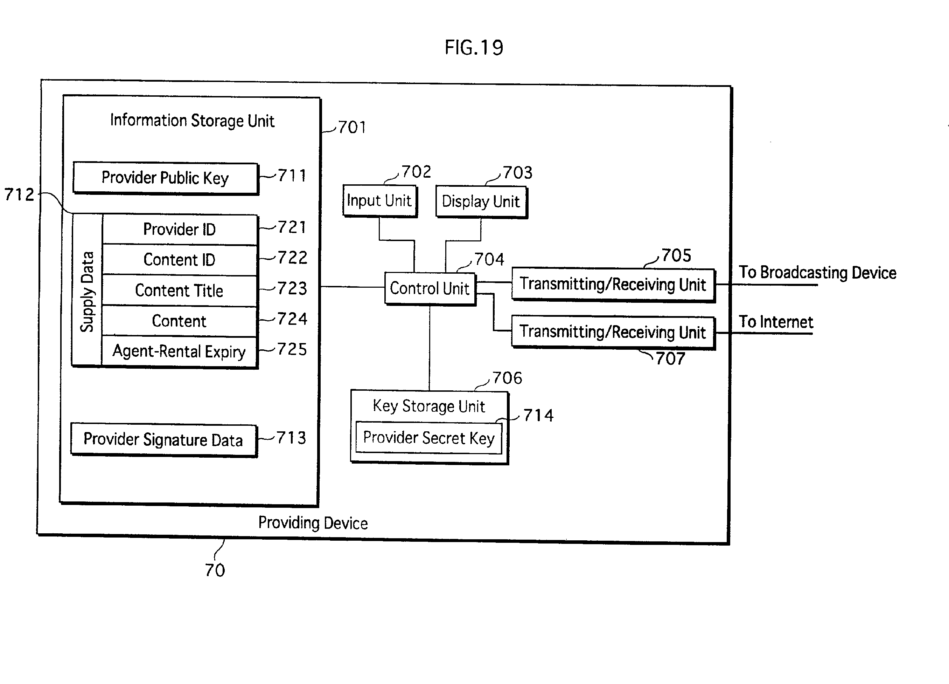

As shown in FIG. 19, providing device 70 is composed of information storage unit 701, input unit 702, display unit 703, control unit 704, transmitting/receiving unit 705, key storage unit 706, and transmitting/receiving unit 707.

To be more specific, providing device 70 is a computer system composed of, for example, a microprocessor, ROM, RAM, a hard disc unit, a display unit, a keyboard, a mouse, a LAN unit. The RAM or the hard disc unit used in the computer system stores a computer program. Providing device 70 performs its function by the microprocessor operating in accordance with the computer program.

### (1) Key Storage Unit 706

Key storage unit 706 is a memory unit that is accessible only to control unit 704 having the read and write permission. Further, key storage unit 706 prestores provider secret key 714. Note that provider secret key 714 is a secret key known only to the provider who administrates providing device 70.

### (2) Information Storage Unit 701

To be more specific, information storage unit 701 is composed of a hard disc unit, and has memory areas for storing provider public key 711, supply data 712, and provider signature data 713, as shown in FIG. 19 by way of example.

Provider public key 711 is a public key generated from provider secret key 714, and passed to and used by other devices.

Supply data 712 is composed of provider ID 721, content ID 722, content title 723, and agent-rental expiry 725. The memory areas for storing provider ID 721, content ID 722, content title 723, and content 724 prestores corresponding information.

Provider ID 721 is an identifier for identifying the provider.

Content 724 include a digital work, such as music or a movie that has been encrypted using a content key.

Content ID 722 is an identifier for identifying content 724.

Content title 723 is a name for identifying content 724.

Agent-rental expiry 725 is information composed of data of year, month, and day representing an expiry date of a period during which broadcasting device 75 is allowed to use content 724 in rental services. Broadcasting device 75 is allowed to rent content 724 to end users until the date of agent-rental expiry 725 has passed. One example of agent-rental expiry 725 is "May 31, 2005."

Provider signature data 713 is a signature data for verifying that agent-rental expiry included in supply data 712 is unaltered. Provider signature data 713 is generated by applying a digital signature algorithm to supply data 712 using provider secret key 714.

(3) Control Unit 704

(Generation of Provider Public Key)

Control unit 704 reads provider secret key 714 from key storage unit 706, and generates provider public key by applying public key generation algorithm to the read provider secret key. Next, control unit 704 writes the generated provider public key as provider public key 711 into information storage unit 701.

Further, control unit 704 transmits the generated provider public key to broadcasting device 75 via transmitting/receiving unit 705 and communications line 71. In addition, control unit 704 transmits the generated provider key to receiving/storing device 90 via transmitting/receiving unit 707 and Internet 5.

(Generation and Transmission of Supply Data and Provider Signature Data)

Control unit 704 reads from information storage unit 701 provider ID 721, content ID 722, content title 723, and content 724.

Next, control unit 704 generates an agent-rental expiry. Here, control unit 704 designates as the agent-rental expiry the date (year, month, and day) five years from the current date. Note that the agent-rental expiry may be determined in any other manner. For example, absolute expiry dates may be set depending on each type of content. Now, control unit 704 writes into information storage unit 701 the generated agent-rental expiry as agent-rental expiry 725 constituting supply data 712.

Next, control unit 704 reads provider secret key 714 from key storage unit 706, and supply data 712 including the thus written agent-rental expiry 725 from information storage unit 701. Control unit 704 then applies digital signature generation algorithm SIG to the read supply date 712 using the read provider key 714 to generate provider signature data.

Provider Signature Data=SIG(Provider Secret Key, Supply Data)

Subsequently, control unit 704 writes the generated provider signature data as provider signature data 713 into information storage unit 701, then transmits the read supply data and the generated provider signature data to broadcasting device 75 via transmitting/receiving unit 705 and communications line 71.

(4) Transmitting/Receiving units 705 and 707

Transmitting/receiving unit 705 is connected to broadcasting device 75 via communications line 71, and performs data transmission between control unit 704 and broadcasting device 75.

Transmitting/receiving device 707 is connected to the other devices via Internet 5, and performs transmission of information between control unit 704 and the other devices.

(5) Input Unit 702 and Display Unit 703

Input unit 702 accepts user operations, and outputs corresponding operational information to control unit 704.

Display unit 703 receives information from control unit 704 and displays the received information.

2.2 Broadcasting Device 75

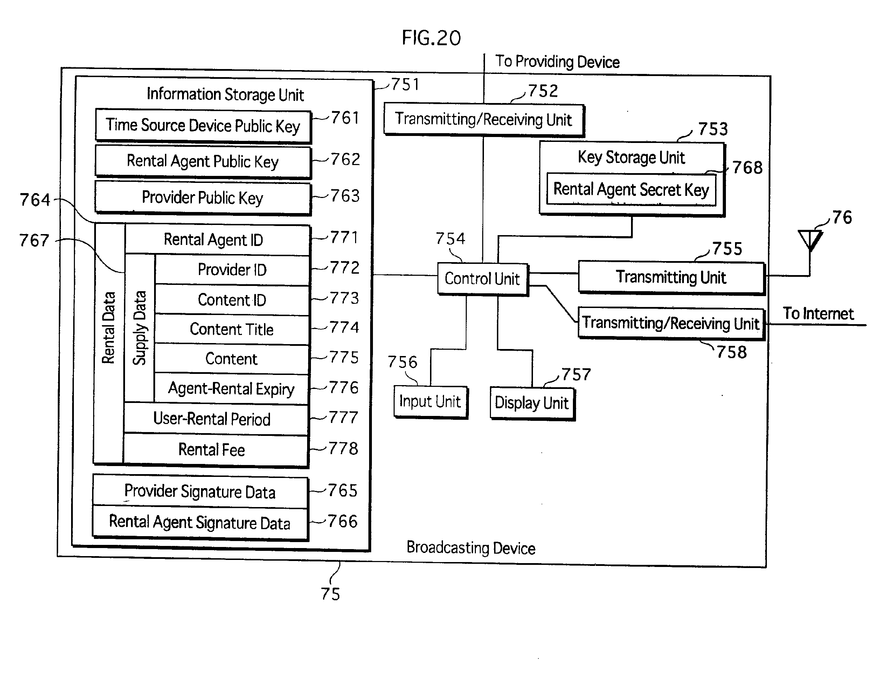

As shown in FIG. 20, broadcasting device 75 is composed of information storage unit 751, transmitting/receiving unit 752, key storage unit 753, control unit 754, transmitting unit 755, input unit 756, display unit 757, andtransmitting/receiving unit 758.

Similarly to providing device 70, broadcasting device 75 is a computer system storing a computer program and including a microprocessor. Broadcasting device 75 performs its function by the microprocessor operating in accordance with the computer program.

Broadcasting device 75 broadcasts a broadcast program composed of image data and voice data via antenna 76 and communications satellite 77. Broadcasting device 75 also broadcasts, as described later, content including digital works in cipher.

(1) Key Storage Unit 753

Key storage unit 753 is a memory unit that is accessible only to control unit 754 having the read and write permission.

Key storage unit 753 prestores rental agent secret key 768. Here, rental agent secret key 768 is a secret key known only to the broadcaster who administrates broadcasting device 75.

## (2) Information Storage Unit 751

To be more specific, information storage unit 751 is composed of, for example, a hard disc unit, and has memory areas for storing time source device public key 761, rental agent public key 762, provider public key 763, rental data 764, provider signature data 765, and rental agent signature data 766, as shown in FIG. 20 bay way of example.

Time source device public key 761 is a public key generated from secret key of time source device that is known only to time source device 85.

Rental agent public key 762 is a public key generated from rental agent secret key that is known only to broadcasting device 75.

Provider public key 763 is a public key generated from provider secret key that is known only to providing device 70.

Rental data 764 is composed of rental agent ID 771, supply data 767, user-rental period 777, and a rental fee 778.

Rental agent ID 771 is an identifier for identifying the broadcaster who administrates broadcasting device 75. Rental agent ID 771 is prestored in a corresponding memory area of rental data 764.

Supply data 767 is the same as the supply data transmitted from providing device 70.

User-rental period 777 is a period determined in days, such as "7 days", representing the period within which receiving/storing device 90 is permitted to outputs content 775 included in supply data 767. In other words, receiving/storing device 90 is permitted to rent content 775 to end users for the duration of user-rental period 777 starting from the day content 775 are played back for the first time.

Rental fee 778 is a value to be paid by an end user for renting content 775 included in supply data 767.

Provider signature data 765 is the same as provider signature data 713, and thus the description thereof is omitted.

Rental agent signature data 766 is signature data generated for verifying that user-rental period 777 is unaltered. Rental agent signature data 766 is generated by applying digital signature algorithm to rental data 764 using rental agent secret key 768.

## (3) Control Unit 754

(Reception and Storage of Provider Public Key)

Control unit 754 receives provider public key from providing device 70 via communications line 71 and transmitting/receiving unit 752, and writes the received provider public key as provider public key 763 into information storage unit 751.

(Reception and Storage of Supply Data and Provider Signature Data)

Control unit 754 receives supply data and provider signature data from providing device 70 via communications line 71 and transmitting/receiving unit 752, and writes into information storage unit 751 the received supply data and provider signature data as supply data 767 and provider signature data 765, respectively.

(Generation and Broadcast of Rental Data and Other Data)

Control unit 754 reads from information storage unit 751 provider signature data 765, provider public key 763, and supply data 767. Control unit 754 then applies a digital signature verification algorithm to the read supply data and provider signature data using the read provider public key 763 to verify whether the agent-rental expiry included in the read supply data is altered.

VERIFY(Provider Public Key, Provider Signature Data, Supply Data)

Having verified that the agent-rental expiry is unaltered, control unit 754 acquires the current time from time source device 85. On the other hand, having detected alteration, control unit 754 outputs to display unit 757 the message indicating that no data is permitted to be supplied.

Upon verifying that the agent-rental expiry is unaltered, control unit 754 compares the acquired current time and the agent-rental expiry included in the supply data. In the event that the current time is equal or prior to the agent-rental expiry, control unit 754 generates a user-rental period. Here, as one example, the user-rental period is uniformly set to be "7 days." Note that the length of user-rental period may be varied depending on the content or at an end user request. Control unit 754 then writes the generated user-rental period as user-rental period 777 into information storage unit 751. Next, control unit 754 generates a rental fee required for the content, and writes the generated rental fee as rental fee 778 into information storage unit 751.

Thereafter, control unit 754 reads rental data 764 composed of rental agent ID 771, supply data 767, user-rental period 777, and rental fee 778 from information storage unit 751.

Further, control unit 754 reads rental agent secret key 768 from key storage unit 753, and applies a digital signature algorithm to the read rental data 764 using the read rental agent secret key 768 to generate rental agent signature data.

Rental Agent Signature Data=SIG(Rental Agent Secret Key, Rental Data)

Next, control unit 754 writes the generated rental agent signature data as rental agent signature data 766 into information storage unit 751.

Control unit 754 then performs reading of rental data 764, provider signature data 765, and rental agent signature data 766 from information storage unit 751, followed by transmission of the read data to receiving/storing device 90 via transmitting unit 755, antenna 76, and communications satellite 77.

Further, control unit 754 compares the acquired current time with the agent-rental expiry included in the supply data. In the event that the current time is later than the agent-rental expiry, control unit 754 outputs to display unit 757 the message indicating that no data is permitted to be supplied.

(Acquisition of Current Time from Time source Device 85)

At an earlier stage, control unit 754 receives the public key of time source device from time source device 85 via Internet 5 and transmitting/receiving unit 758, and writes the received time source device public key as time source device public key 761 into information storage unit 751.

In order for broadcasting device 75 to acquire the current time, control unit 754 issues an acquisition request for current time to time source device 85 via transmitting/receiving unit 758 and Internet 5.

Subsequently, control unit 754 receives the current time along with current time signature data from time source device 85 via Internet 5 and transmitting/receiving unit 758.

Next, control unit 754 reads time source device public key 761 from information storage unit 751, applies a digital signature verification algorithm to the received current time and current time signature data using the read public key of time source device to verify whether the current time has been altered.

VERIFY(Public Key of Time Source Device, Current Time Signature Data, Current Time)

Having judged that the current time is altered, control unit 754 terminates the processing. Having verified that there is no alteration, on the other hand, control unit continues the processing.

(4) Transmitting/Receiving Unit 752, Transmitting Unit 755, and Transmitting/Receiving Unit 758

Transmitting/receiving unit 752 is connected to broadcasting device 75 via communications line 71, and performs data transmission between control unit 754 and broadcasting device 75.

Transmitting unit 755 is connected to antenna 76, receives information from control unit 754, and broadcasts the received information in the form of broadcast wave via antenna 76 and communications satellite 77.

Transmitting/receiving unit 758 is connected to time source device 85 via Internet 5, and performs data transmission between control unit 754 and time source device 85.

(5) Input Unit 756 and Display Unit 757

Input unit 756 accepts user operations, and outputs corresponding operational information to control unit 754.

Display unit 757 receives information from control unit 754, and displays the received information.

2.3 Billing Device 80

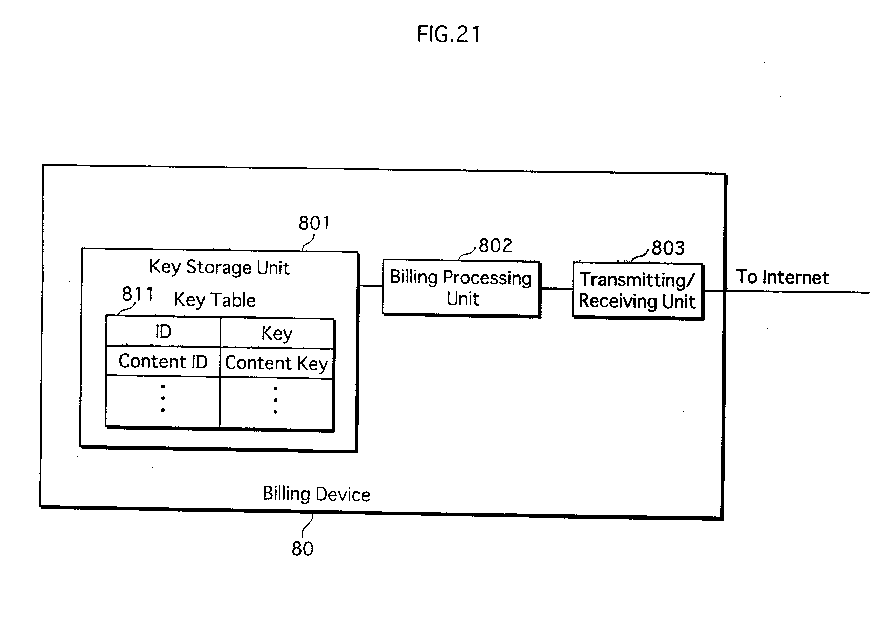

As shown in FIG. 21, billing device 80 is composed of information storage unit 801, billing processing unit 802, and transmitting/receiving unit 803.

Similarly to providing device 70, billing device 80 is a computer system storing a computer program and including a microprocessor. Billing device 80 performs its function by the microprocessor operating in accordance with the computer program.

(1) Information Storage Unit 801

As shown in FIG. 21, an exemplary information storage unit 801 prestores key table 811.

Key table 811 includes memory areas each for storing an ID and a corresponding Key.

At least one of the memory areas prestores a content ID and a corresponding content key.

Here, the content ID is the same as content ID 722 included in supply data 712 stored in information storage unit 701 of providing device 70.

Further, the content key is a key used to decrypt the cipher corresponding to a digital work included in content 724 that constitutes supply data 712.

(2) Billing Processing Unit 802

Billing processing unit 802 first receives payment information and a content ID from receiving/storing device 90 via Internet 5 and transmitting/receiving unit 803, and performs billing processing based on the received payment information and content ID.

Subsequently, billing processing unit 802 reads a content key that corresponds to the received content ID from key table 811 stored in information storage unit 801, and transmits the read content key to receiving/storing device 90 via transmitting/receiving unit 803 and Internet 5.

(3) Transmitting/Receiving Unit 803

Transmitting/receiving unit 803 is connected to receiving/storing device 90 via Internet 5, and performs data transmission between receiving/storing device 90 and billing processing unit 802.

2.4 Time Source Device 85

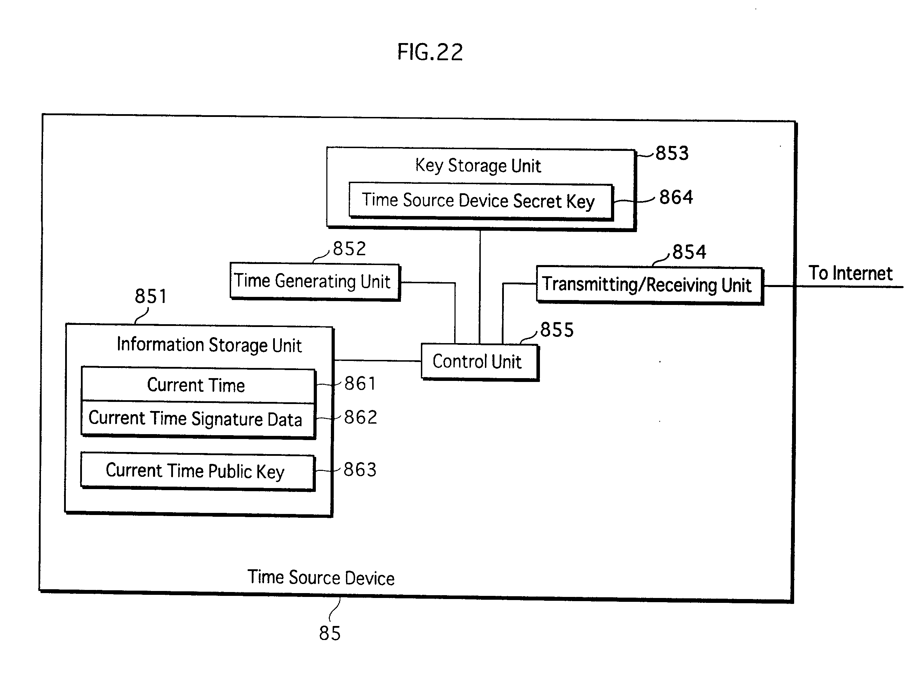

As shown in FIG. 22, time source device 85 is composed of information storage unit 851, time generating unit 852, key storage unit 853, transmitting/receiving unit 854, and control unit 855.

Similarly to providing device 70, time source device 85 is a computer system storing a computer program and including a microprocessor. Time source device 85 performs its function by the microprocessor operating in accordance with the computer program.

In response to a request from broadcasting device 75 or receiving/storing device 90, time source device 85 generates current time and transmits the generated current time to the request broadcasting device 75 or receiving/storing device 90, whichever device that has issued.

(1) Key Storage Unit 853

Key storage unit 853 is a memory unit that is accessible only to control unit 855 having the read and write permission.

Key storage unit 853 prestores secret key 864 of time source device which is a secret key known only to the time source agent who administrates time source device 85.

(2) Information Storage Unit 851

Information storage unit 851 has memory areas for storing current time 861, current time signature data 862, and time source device public key 863.

Current time 861 is the time generated by time generating unit 852.

Current time signature data is signature data for verifying whether current time 861 has been altered. Current time signature data is generated by applying a digital signature algorithm to current time 861 using the time source device secret key.

Time source device public key 863 is a public key generated by applying a public key generation algorithm to time source device secret key 864.

(3) Time Generating Unit 852

Time generating unit 852 is provided with a timer installed therein, acquires current time, and outputs the acquired current time to control unit 855. Note that the current time is composed of data indicating a date in year, month, and date.

(4) Control Unit 855

Hereinafter, description is given to the operations of control unit 855 performed at the time of transmitting the current time to broadcasting device 75 as one example. Note that substantially the same operations are performed at the time of transmitting the current time to receiving/storing device 90, and thus description thereof is omitted.

(Transmission of Time Source Device Public Key)

Control unit 855 transmits the time source device public key to broadcasting device 75 in advance in the following manner.

First, control unit 855 reads time source device secret key 684 from key storage unit 853, and generates a time source device public key by applying a public key generation algorithm to the read time source device secret key, and writes the generated time source device public key as time source device public key 863 into information storage unit 851.

Next, control unit 855 transmits the generated time source device public key to broadcasting device 75 via transmitting/receiving unit 854 and Internet 5.

(Transmission of Current Time)

Control unit 855 transmits the current time in the following manner.

First, control unit 855 receives an acquisition request for current time from broadcasting device 75 via Internet 5 and transmitting/receiving unit 854.

Upon receipt of the acquisition request, control unit 855 acquires current time from time generating unit 852, and reads time source device secret key 864 from key storage unit 853.

Subsequently, control unit 855 applies a digital signature algorithm to the acquired current time using the read time source device secret key to generate current time signature data.

Current Time Signature Date=SIG (Time Source Device Secret Key, Current Time)

Next, control unit 855 writes the generated current time signature data as current time signature data 862 into information unit 851, and transmits the acquired current time together with the generated current time signature data to broadcasting device 75 via transmitting/receiving unit 854 and Internet 5.

(5) Transmitting/Receiving Unit 854

Transmitting/receiving unit 854 is connected to both broadcasting device 75 and receiving/storing device 90, and performs data transmission between control unit 855 and broadcasting device 75, or between control unit 855 and receiving/storing device 90.

2.5 Receiving/Storing Device 90

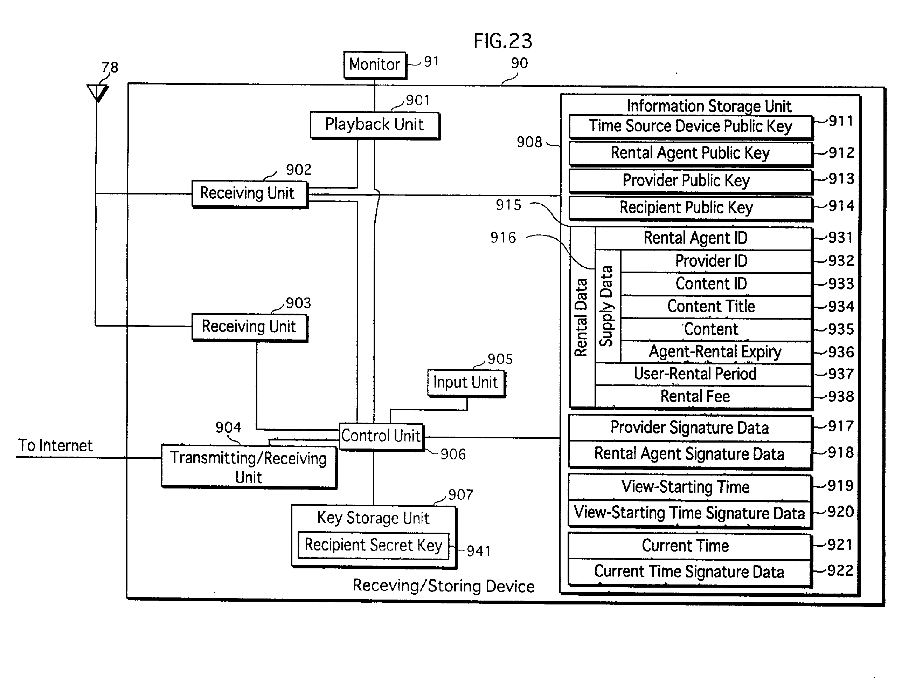

As shown in FIG. 23, receiving/storing device 90 is composed of playback unit 901, receiving unit 902, receiving unit 903, transmitting/receiving unit 904, input unit 905, control unit 906, key storage unit 907, and information storage unit 908.

Similarly to providing device 70, receiving/storing device 90 is a computer system storing a computer program and including a microprocessor. Receiving/ storing device 90 performs its function by the microprocessor operating in accordance with the computer program.

(1) Key Storage Unit 907

Key storage unit 907 is a memory unit that is accessible only to control unit 906 having the read and write permission.

Further, key storage unit 907 prestores recipient secret key 941. Note that recipient secret key 941 is a secret key known only to the end user who uses receiving/storing device 90.

(2) Information Storage Unit 908

As shown in FIG. 23 by way of an example, information storage unit 908 has memory areas for storing time source device public key 911, rental agent public key 912, provider public key 913, recipient public key 914, rental data 915, provider signature data 917, rental agent signature data 918, view-starting time 919, view-starting time signature data 920, current time 921, and current time signature data 922.

Time source device public key 911 is a public key generated by applying a public key generation algorithm to the time source device secret key that is known only to time source device 85.

Rental agent public key 912 is a public key generated from the rental agent secret key that is known only to broadcasting device 75.

Provider public key 913 is a public key generated from the provider secret key that is known only to providing device 70.

Recipient public key 914 is a public key generated from the recipient secret key that is know only to receiving/storing device 90.

Rental data 915 is the same as the rental data broadcasted from broadcasting device 75, and thus description thereof is omitted.

Provider signature data 917 is the same as the provider signature data 713 described above, and thus description thereof is omitted.

Rental agent signature data 918 is the same as the rental agent signature data 766, and thus description thereof is omitted.

View-starting time 919 is the data representing the date in year, month and day at which the content included in rental data 915 is played back for the first time.

View-string time signature data 920 is a signature data that is used for verifying whether view-starting time 919 has been altered, and that is generated by applying a digital signature algorithm to view-staring time 919 using recipient secret key 941.

Current time 921 is the current time transmitted from time source device 85, and composed of data representing date in year, month, and day.

Current time signature data 922 is signature data that is used to verify whether current time 921 has been altered, and that is generated by applying a digital signature algorithm to the current time using the time source device secret key that is known only to time source device 85.

(3) Control Unit 906

(Reception and Storage of Rental Data and Other Data)

Control unit 906 receives the rental data, provider signature data, and rental agent signature data via antenna 78 and receiving unit 903, and then writes the received rental data, provider signature data, and rental agent signature data into information storage unit 908 as rental data 915, provider signature data 917 and rental agent signature data 918, respectively.

(Selection of Content and Payment for the Content)

Control unit 906 reads from information storage unit 908 content title 934 and content ID 933 both included in rental data 915, and outputs the read content title and content ID to monitor 91 via playback unit 901.

Upon receipt of the content ID via input unit 905, control unit 906 generates payment information indicating a rental fee for the content corresponding to the inputted content ID, and transmits the generated payment information along with the inputted content ID to billing device 80 via transmitting/receiving unit 904 and Internet 5.

Further, control unit 906 receives and stores the content key via Internet 5 and transmitting/receiving unit 904.

(Playback of Content)

Control unit 906 receives a playback instruction via input unit 905.

Upon receipt of playback instruction, control unit 906 issues an acquisition request for current time to time source device 85. As a consequence, control unit 906 receives current time from time source device 85 via Internet 5 and transmitting/receiving unit 904.

Next, control unit 906 sequentially reads from information storage unit 908 provider signature data 917, provider public key 913, and supply data 916. Control unit 906 then applies a signature data verification algorithm to the read supply data and supply data signature data using the read provider public key to verify whether the agent-rental expiry included in the supply data has been altered.

VERIFY(Provider Public Key, Provider Signature Data, Supply Data)

Upon verifying the authenticity of the agent-rental expiry, control unit 906 compares the acquired current time and the agent-rental expiry included in the supply data. In the event the current time is equal or prior to the agent-rental expiry, control unit 906 further judges whether content 935 stored have been played back ever before, i.e., content 935 will be played back for the first time.

Having judged that content 935 will be played back for the first time, control unit 906 writes the acquired current time as view-starting time 919 into information storage unit 908. Next, control unit 906 reads recipient secret key from key storage unit 907 and view-starting time 919 from information storage unit 908, and then applies a digital signature algorithm to the read view-starting time using the read recipient secret key to generate view-starting time signature data.

View-starting Time Signature Data=SIG(Recipient Secret Key, View-starting Time)

Here, control unit 906 writes the generated view staring time signature data as view-staring time signature data 920 into information storage unit 908.

Further, control unit 906 reads content 935 from information storage unit 908, and decrypts a digital work included in the read content 935 in cipher, and outputs the encrypted digital work to monitor 91 via playback unit 901.

On the other hand, having judged that content 935 has been played back before, control unit 906 reads recipient secret key 941 from key storage unit 907, and view-starting time 919 along with view-starting time signature data 920 from information storage unit 908. Then, control unit 906 applies a digital signature verification algorithm to the read view-starting time and view-starting time signature data using the read recipient secret key to verify whether the view-starting time has been altered.

VERIFY(Recipient Secret Key, View-starting Time Signature Data, View-starting Time)

Having verified the authenticity of the view-starting time, control unit 906 reads rental agent public key 912, rental data 915, and rental agent signature data 918 from information storage unit 908. Subsequently, control unit 906 applies a digital signature verification algorithm to the read rental data and the read rental agent signature data using the read rental agent public key to verify whether the user-rental period has been altered.

VERIFY(Rental Agent Public Key, Rental Agent Signature Data, Rental Data)

Having verified there is no alteration, control unit 906 compares the acquired current time with the expiry date of the user-rental period starting from the view-starting time. In the event that the current time is equal or prior to the expiry date, control unit 906 reads content 935 from information storage unit 908, and decrypts a digital works included in the read content 935 in cipher, and outputs the encrypted digital work to monitor 91 via playback unit 901.

In the event that the current time is later than the expiry date of the user-rental period starting from the view-starting time, control unit 906 generates the message indicating that the content is not permitted to be played back, and outputs the generated message to the monitor 91 via playback unit 901. Here, such setting may be made so as to delete the rental data 915 from information storage unit 908 in the event the current time is later than the expiry of the user-rental period.

Next, control unit 906 receives an instruction regarding whether to extend the user-rental period. When receiving the instruction not to extend the user-rental period, control unit 906 does not play back the content.

Further, in the event that (1) the agent-rental period included in the read supply data is confirmed to have been altered, or (2) the acquired current time is later than the agent-rental expiry include in the supply data, control unit 906 generates the message indicating that the content is not permitted to be played back, and outputs the generated message to monitor 91 via playback unit 901. As a consequence, the content is not played back. Here, such setting may be made that control unit 906 deletes the rental data 915 from information storage unit 908 in the event the current time is later than the rental agent expiry.

Still further, having judged that the view-starting time and/or the user-rental period has been tampered, control unit 906 generates the message indicating that the content are not permitted to be played back, and outputs the generated message to the monitor 91 via playback unit 901. As a consequence, the content is not played back.

On the other hand, when receiving the instruction to extend the user-rental period, control unit 906 performs processing in conjunction with billing device 80 so that the fee necessary for extending the user-rental period is paid.

Subsequently, control unit 906 overwrites view-starting time 919 stored in information storage unit 908 with the acquired current time, and then generates view-starting time signature data in the manner similar to the above. Further, control unit 906 overwrites view-starting time signature data 920 stored in information storage unit 908 with the newly generated view-starting time signature data. As a result, the content is permitted to be decrypted and played back in the manner similar to the above.

(4) Playback Unit 901

Playback unit 901 (1) receives from control unit 906 information, such as the content title, the content ID, the digital work, and various messages, (2) converts the received information into format displayable by monitor 91, and (3) outputs the converted information to monitor 91.

(5) Receiving Unit 902

Receiving unit 902 receives the broadcast program composed of image data and voice data in the form of broadcast wave, and outputs the received program to monitor 91 via playback unit 901 under user control inputted through input unit 905.

(6) Receiving Unit 903

Receiving unit 903 receives the rental data, provider signature data, and rental agent signature data that are broadcasted in the form of broadcast wave via antenna 78, and outputs the received data to control unit 906.

(7) Transmitting/Receiving Unit 904

Transmitting/receiving unit 904 is connected to billing device 80 as well as to time source device 85 via Internet 5, and performs data transmission between control unit 906 and billing device 80 as well as between control unit 906 and time source device 85.

(8) Input Unit 905

Input unit 905 receives a user selected content ID from an end user, and outputs the received content ID to control unit 906.
Further, input unit 905 receives an instruction for playback of content from an end user, and outputs the received instruction to control unit 906.

2.6 Operations of Rental System 2

Hereinafter, description is given to the operations of rental system 2.

(1) Operations of Providing Device 70

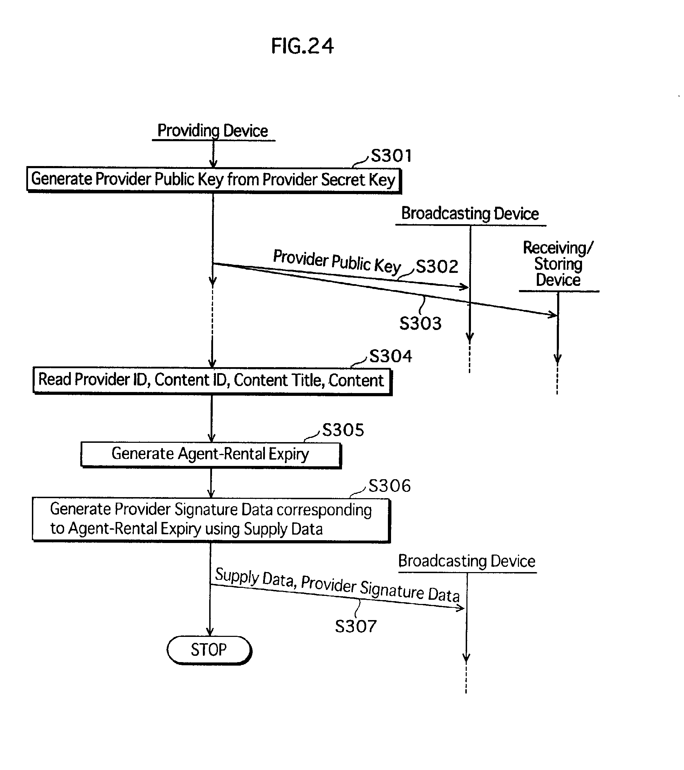

First, description is given to the operations of providing device 70 with reference to the flowchart shown in FIG. 24.
Providing device 70 transmits the provider public key to broadcasting device 75 and receiving/storing device 90 in advance in the following manner.
Control unit 704 reads provider secret key 714 from key storage unit 706, applies a public key generation algorithm to the read provider secret key to generate provider public key, and then writes the generated provider public key as provider public key 711 into information storage unit 701 (step S301) . Further, control unit 704 transmits the generated provider public key via transmitting/receiving unit 705 and communications line 71 to broadcasting device 75 (step S302) as well as to receiving/storing device 90 (step S303).
Next, providing device 70 transmits the supply data and the provider signature data to broadcasting device 75 in the following manner.
First, control unit 704 reads provider ID 721, content ID 722, content title 723, and content 724 from information storage unit 701 (step S304), generates agent-rental expiry, and writes the generated agent-rental expiry, writes into information storage unit 701 the generated agent-rental expiry as agent-rental expiry 725 included in supply data 712 (step S305).
Next, control unit 704 reads provider secret key 714 from key storage unit 706, and supply data 712 containing agent-rental expiry 725 from information storage unit 701. Subsequently, control unit 704 applies a digital signature algorithm to the read supply data 712 using the read provider secret key 714 to generate provider signature data, which is then written as provider signature data 713 into information storage unit 701 (step S306). Thereafter, control unit 704 transmits the read supply data and the generated provider signature data to broadcasting device 75 via transmitting/receiving unit 705 and communications line 71 (step S307).

(2) Operations of Broadcasting Device 75

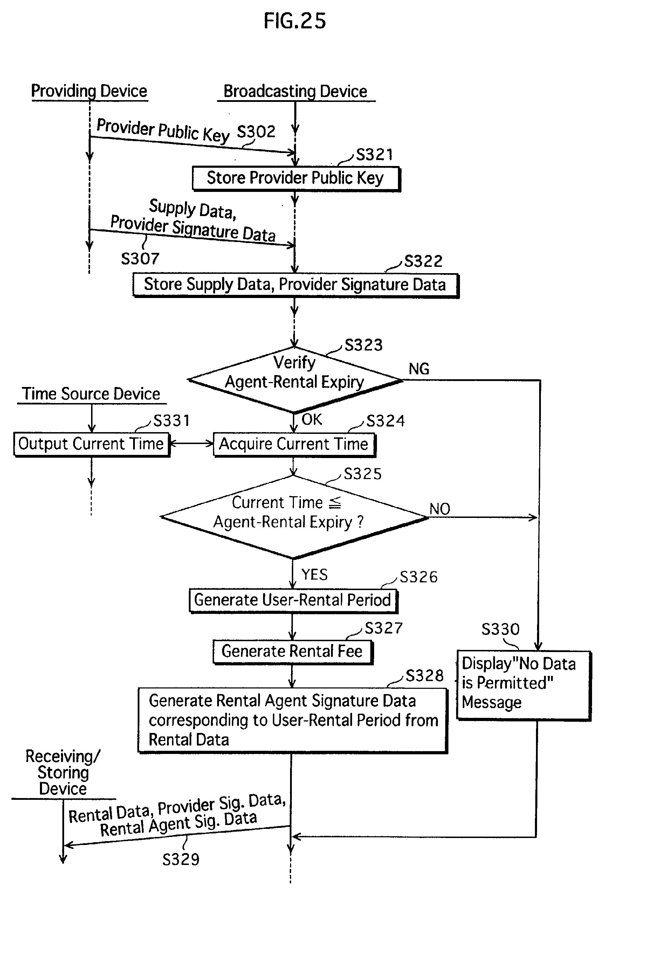

Now, description is given to operations of broadcasting device 75 with reference to the flowchart shown in FIG. 25.
Broadcasting device 75 receives the provider public key from providing device 70 and stores the received provider public key in advance in the following manner.
First, control unit 754 receives the provider public key from providing device 70 via communication line 71 and transmitting/receiving unit 752 (step S302), and writes the received provider public key as provider public key 763 into information storage unit 751 (step S321).
Further, broadcasting device 75 receives supply data along with provider signature data from providing device 70, and stores the received data in the following manner.
First, control unit 754 receives the supply data along with the provider signature data from providing device 70 via columniations line 71 and transmitting/receiving unit 752 (step S307), and writes the received supply data and provider signature data as supply data 767 and provider signature data 765, respectively, into information storage unit 751 (step S322).

Still further, broadcasting device 75 generates rental data and other data in the following manner, and broadcasts the generated rental data and other data in the form of broadcast wave.

First, control unit 754 reads provider signature data 765, provider public key 763, supply data 767 from information storage unit 751, and applies a digital signature verification algorithm to the read supply data and provider signature data to verify whether the agent-rental expiry contained in the read supply data has been altered (step S323). Having verified the authenticity of the agent-rental expiry (step S323, OK), time source device 85 outputs the current time (step S331), andcontrol unit 754 acquires the current time from time source device 85 (step S324).

Next, control unit 754 compares the acquired current time and the agent-rental expiry contained in the supply data (step S325). In the event that the current time is equal or prior to the agent-rental expiry (step S325, YES), control unit 754 generates a user-rental period, writes the generated user-rental period as user-rental period 777 into information storage unit 751 (step S326), and generates rental fee data which is then written as rental fee 778 into information storage unit 751 (step S327).

Subsequently, control unit 754 reads rental data 764 composed of rental agent ID 771, supply data 767, user-rental period 777, and rental fee 778 from information store storage unit 751, and rental agent secret key 768 from key storage unit 753. Control unit 754 then applies a digital signature algorithm to the read rental data to generate rental agent signature data which is then written as rental agent signature data 766 into information storage unit 751 (step S328).

Next, control unit 754 reads rental data 764, provider signature data 765, rental agent signature data 766 from information storage unit 751, and transmits the read rental data, provider signature data, rental agent signature data to receiving/storing device 90 via transmitting unit 755, antenna 76, and communications satellite 77 (step S329).

Alternatively, upon detecting in step S323 that the agent-rental expiry has been altered (step S323, NG), control unit 754 outputs to display unit 757 the message indicating that no data is permitted to be supplied, so that display unit 757 displays the outputted message (step S330). As a consequence, neither the rental data nor the provider signature data is broadcasted.

Further, in the event that the current time is judged in step S325 to be later than the agent-rental expiry (step S325, NO), control unit 754 goes onto step S330, so that display unit 757 displays the message indicating that no data is permitted to be supplied. As a consequence, none of the rental data, the provider signature data, or the rental agent signature data is broadcasted.

(3) Operation of Receiving/Storing Device 90

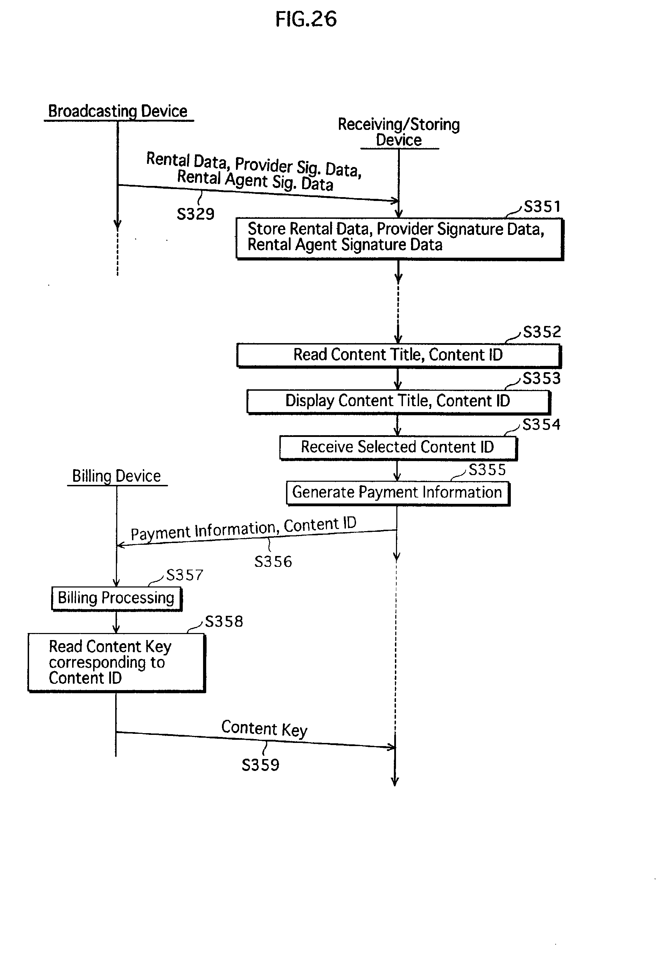

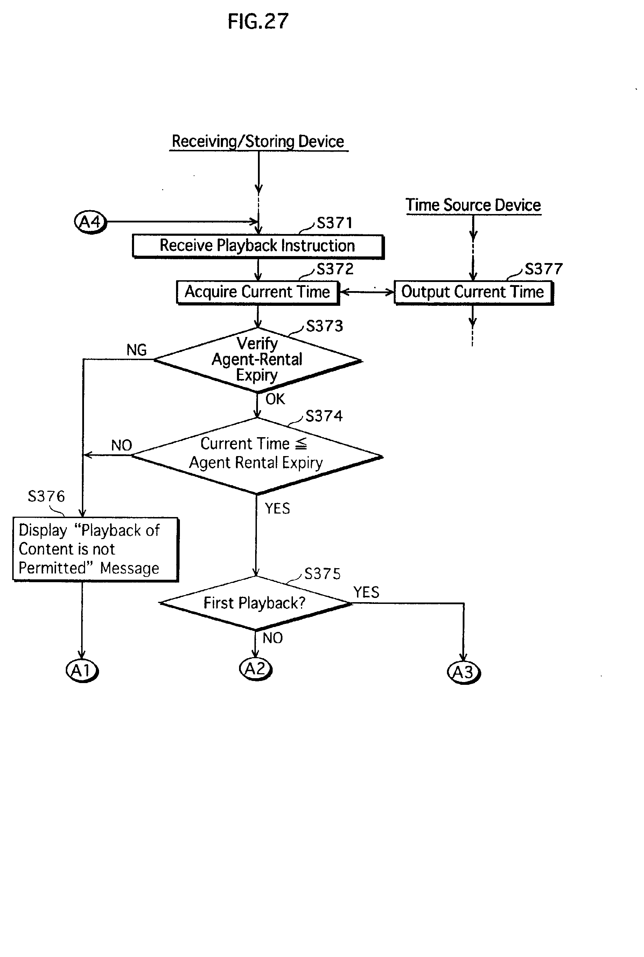

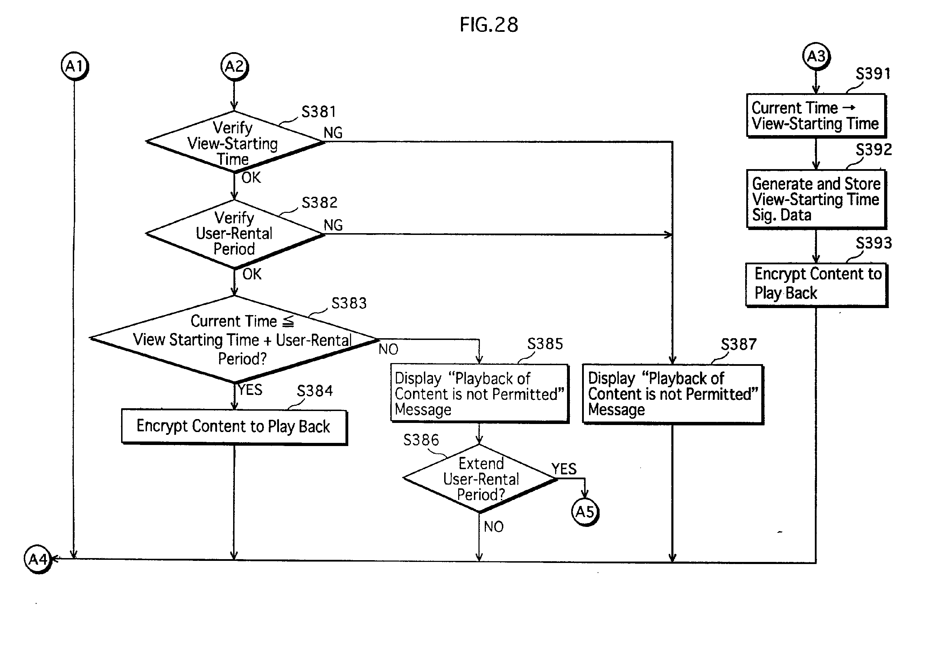

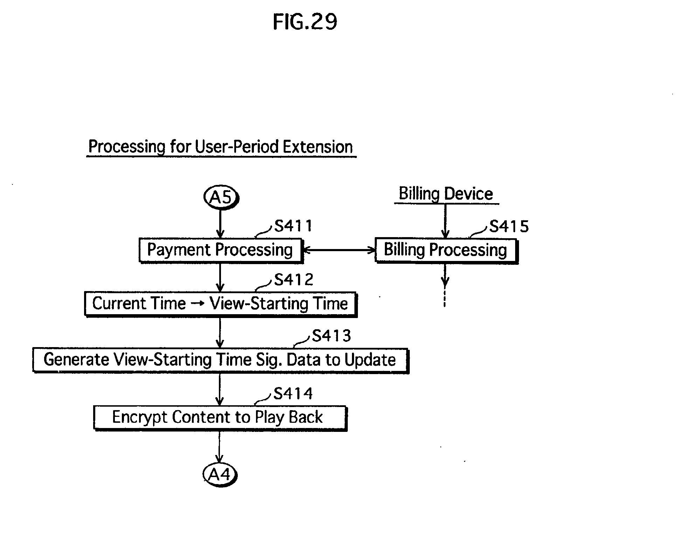

Hereinafter, description is given to the operations of receiving/storing device 90 with reference to the flowcharts shown in FIGs. 26-29.

Receiving/storing device 90 receives and stores the rental data and other data from broadcasting device 75 in the following manner.

First, control unit 906 receives the rental data, the provider signature data, and rental agent signature data (step S329), and writes the received rental data, provider signature data, and rental agent data as rental data 915, provider signature data 917, and rental agent signature data 918, respectively, into information storage unit 908 (step S351).

Further, receiving/storing device 90 selects content and pays the renal fee for the selected content in the following manner.

First, control unit 906 reads from information storage unit 908 content title 934 together with content ID 933 both of which are included in rental data (step S352), and outputs the read content title and content ID to monitor 91 via playback unit 901, whereby monitor 91 displays the content title and content ID (step S353). Next, input unit 905 receives a user-selected content ID from an end user, and outputs the received content ID to control unit 906 (step S354).

Next, control unit 906 generates payment information representing the rental fee for the content that is identified by the received content ID (step S355), and transmits the generated payment information together with the received content ID to billing device 80 via transmitting/receiving unit 904 and Internet 5 (step S356).

Billing processing unit 802 of billing device 80 receives via Internet 5 and transmitting/receiving unit 803 the payment information and the content ID that are transmitted from receiving/storing device 90 (step S356).

Billing processing unit 802 performs billing processing based on the received payment information and content ID (step S357), reads the content key corresponding to the received content ID from key table 811 stored in key information storage unit 801 (step S358), and transmits the read content key to receiving/storing device 90 via transmitting/receiving unit 803 and Internet 5. In response, control unit 906 of transmitting/receiving device 90 receives the content key via Internet 5 and transmitting/receiving unit 904, and stores the received content key (step S359).

Further, receiving/storing device 90 plays back the stored content in the following manner.

Input unit 905 of receiving/storing device 90 receives playback instruction for content from an end user, and outputs the received playback instruction to control unit 906 (step S371). Upon receipt of the playback instruction, control unit 906 issues a request for acquisition of current time to time source device 85. In response, time source device 85 outputs the current time to receiving/storing device 90 (step S377), so that control unit 906 receives the current time from time source device 85 via Internet 5 and transmitting/receiving unit 904 (step S372).

Next, control unit 906 reads provider signature data 917, provider public key 913, supply data 916 from information storage unit 908, and applies a digital signature verification algorithm to the read supply data and provider signature data using the read provider public key to verify whether the agent-rental period included in the read supply data has been altered (step 5373). Having verified that the authenticity of the agent-rental period (step S373, OK), control unit 906 compares the acquired current time and the agent-rental period included in the supply data (step S374). In the event that the current time is equal or prior to the agent-rental period (step S374, YES), and that the content stored therein is judged to be played back for the first time (step S375, YES), control unit 906 writes the acquired current time as view-starting time 919 into information storage unit 908 (step S391). Subsequently, control unit 906 reads recipient secret key from key storage unit 907, and view-starting time 919 from information storage unit 908, and then applies a digital signature algorithm to the read view-starting time to generate view-starting time signature data, which is then written as view-starting time signature data 920 into information storage unit 908 (step S392). Next, control unit 906 reads content 935 from information storage unit 908 to decrypt a digital work included in the read content in cipher using the content key that has been received and stored therein, and outputs the encrypted digital work via playback unit 901 to monitor 91 where the digital work is displayed (step S393). Thereafter, control unit S371 goes back to step S371 to repeat the processing.

On the other hand, having judged that the content 935 stored therein has been played back before (step S375, NO), control unit 906 reads recipient secret key from key storage unit 907, view-starting time 919 along with view-starting time signature data 920 from information storage unit 908. Thereafter, control unit 906 applies a digital signature verification algorithm to the read view-starting time and view-starting time signature data using the read recipient secret key to verity whether the view-starting time has been altered (step S381). Having verified that the view-starting time is unaltered (step S381, OK), control unit 906 reads rental agent public key 912, rental data 915, and rental agent signature data from information storage unit 908. Subsequently, control unit 906 applies a digital signature verification algorithm to the read rental data and rental agent signature data using the read rental agent public key to verify whether the user-rental period has been altered (step S382). Having judged that the user-rental period is unaltered (step S382, YES), control unit 906 compares the acquired current time with the expiry of the user-rental period starting from the view-starting time (step S383). In the event that the current time is equal or prior to the expiry of the user-rental period (current time $\leq$ view starting time + user-rental period) (step S383, YES), control unit 906 reads the content from information storage unit 908, and encrypts a digital work included in the read content 935 in cipher, and outputs the encrypted digital work to monitor 91 via playback unit 901. Consequently, monitor 91 displays the digital work (step S384). Thereafter, control unit 906 goes back to step S371 to repeat the processing.

Alternatively, in the event that the acquired current time is later than the expiry of the user-rental period starting from the view-starting time (step S383, NO), control unit 906 generates the message indicating that the content is not permitted to be played back, and outputs the generated message to monitor 91 via playback unit 901, so that monitor 91 displays the message (step S385). Next, control unit 906 receives a user instruction via input unit 905 as to whether the user-rental period is to be extended (step S386). When instructed not to extend the user-rental period (step S386, NO), control unit 906 goes back to step S371 without playback of the content to repeat the processing.

Further, in the event that the agent-rental period included in the read supply data is confirmed to have been altered (step S373, NG), or that the acquired current time is later than the agent-rental expiry included in the read supply data (step S374, NO), control unit 906 generates the message indicating that the content is not permitted to be played back, and outputs the generated message to monitor 91 via playback unit 901, so that monitor 91 displays the message (step S376). Thereafter, control unit 906 goes back to step S371 without playback of the content to repeat the processing.

Further, having judged that the view-starting time has been altered (step S381, NG) or that the user-rental period has been altered (step S382, NG), control unit 906 generates the message indicating that the content is not permitted to be played back just as in step S376, so that monitor 91 displays the message (step S387). Thereafter, control unit 906 goes back to step S371 without playback of the content to repeat the processing.

On the other hand, upon receipt of user instruction to extend the user-rental period (step S386, YES), control unit 906 performs payment processing to make the payment of the extension fee (step S411), and billing device 80 performs corresponding billing processing (step S415).

Subsequently, control unit 906 overwrites view-starting time 919 stored in information storage unit 908 with the acquired current time (step S412), and generates view-starting time signature data just as in step S392 to overwrite view-starting time signature data 920 stored in information storage unit 908 with the newly generated view-starting time signature data (step S413). Thereafter, control unit 906 decrypts the content and plays back the decrypted content just as in step S384 (step S414). Control unit 906 then goes back to step S371 to repeat the processing.

(4) Operations of Broadcasting Device 75 in conjunction with Time source Device 85 for Acquisition of Current Time

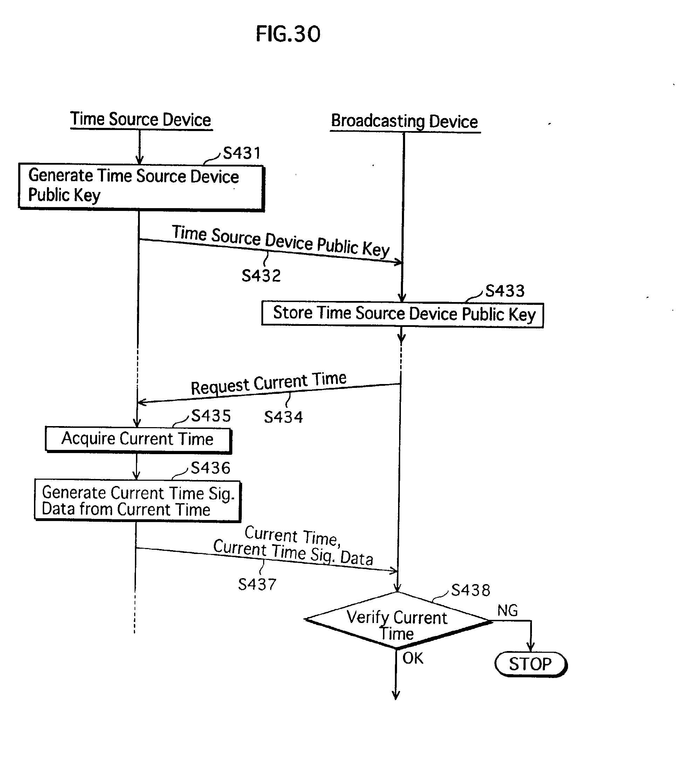

Now, description is given to operations performed by broadcasting device 75 in conjunction with time source device 85 for acquiring current time with reference to the flowchart shown in FIG. 30.

Note that operations performed by receiving/storing device 90 in conjunction with time source device 85 for acquiring current time is similar to the operations to be described hereinafter, and thus description thereof is omitted.

Time source device 85 transmits the time source device secret key to broadcasting device 75 in advance in the following manner.

Control unit 855 of time source device 85 reads time source device secret key 684 from key storage unit 853, applies a public key generation algorithm to the read time source device secret key to generate a time source device public key, and writes the generated time source device public key as time source device public key 863 into information storage unit 851 (step S431). Control unit 855 then transmits the generated time source device public key to broadcasting device 75 via transmitting/receiving unit 854 and Internet 5. In response, control unit 754 of broadcasting device 75 receives, via Internet 5 and transmitting/receiving unit 758, the time source device public key transmitted from time source device 85 (step S432). Control unit 754 then writes the received time source device public key as time source device public key 761 into information storage unit 751 (step S433).

Further, broadcasting device 75 acquires current time from time source device 85 in the following manner.

In order for broadcasting device 75 to acquire current time, control unit 754 of broadcasting device 75 issues an acquisition request for current time to time source device 85 via transmitting/receiving unit 758 and Internet 5. In response, control unit 855 receives the request via Internet 5 and transmitting/receiving unit 854 (step S434).

Upon receipt of the acquisition request, control unit 855 acquires current time from time generating unit 852 (step S435), and reads time source device secret key 854 from key storage unit 853. Control unit 855 then applies a digital signature algorithm to the acquired current time using the read time source device secret key to generate current time signature data which is then written as current time signature data 862 into information storage unit 851 (step S436). Thereafter, control unit 855 transmits the acquired current time and the generated current time signature data to broadcasting device 75 via transmitting/receiving unit 854 and Internet 5. In response, control unit 754 receives the current time together with the current time signature data via Internet 5 and transmitting/receiving unit 758 (step S437).

Next, control unit 754 reads time source device public key 761 from information storage unit 751, and applies a digital signature verification algorithm to the received current time and the received current time signature data using the read time source device public key to verify whether the current time has been altered (step S438). Having judged that the current time is altered (step S438, NG), control unit 754 terminates the processing. On the other hand, having verified the authenticity of the current time (step S438, OK), control unit 754 continues the processing.

2.7 Modification (1)

In the above embodiments, a rental period during which content is permitted to be played back is set. For example, a rental period of three days means that an end user is permitted to play back the content for three days staring from the day the end user plays back the content for the very first time.

Alternatively, however, a period during which an end user is permitted to play back the content may be set by determining a fixed date as the expiry of the rental period. For example, a rental period expiring on May 10, 2002 means that the end user is permitted to use the content up to May 10, 2002.

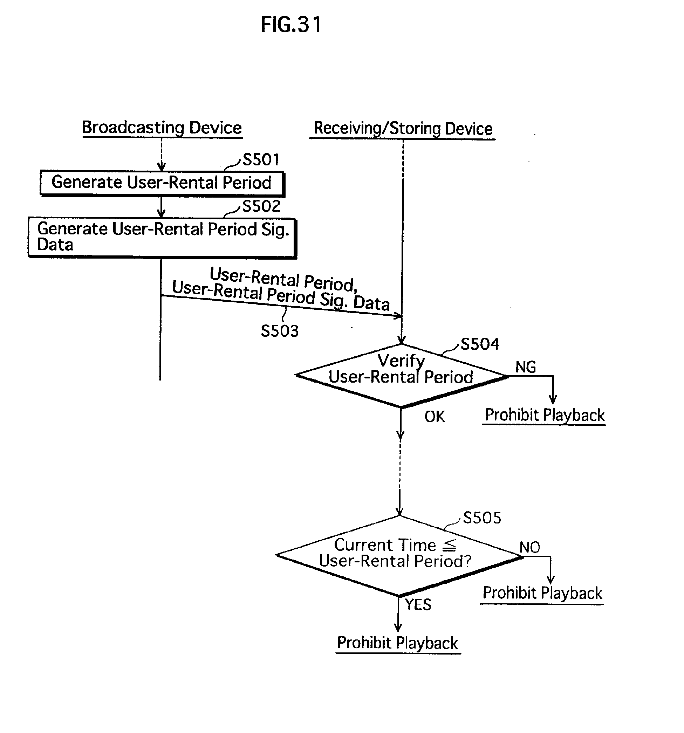

Now, with reference to the flowchart shown in FIG. 31, description is given to the operations of broadcasting device 75 and receiving/storing device 90 in the case the user-rental period is set by determining a fixed expiry date.

First, control unit 754 of broadcasting device 75 generates a user-rental expiry (step S501), and then applies a digital signature algorithm to the user-rental expiry using the renal agent secret key to verify whether the user-rental expiry has been altered (step S502). Next, control unit 754 transmits the generated user-rental expiry and signature data to receiving/storing device 90. In response, control unit 906 of receiving/storing device 90 receives the rental expiry together with the signature data (step S503).

Control unit 906 then applies a digital signature verification algorithm to the user-rental expiry and signature data to verify whether the user-rental expiry has been altered (step S504). Having judged that the user-rental expiry is altered (step S504, NG), control unit 906 does not permit the content to be played back.

On the other hand, having verified the authenticity of the user-rental expiry (step S504, OK), control unit 906 compares the acquired current time with the user-rental expiry (step S505). In the event that the current time is equal or prior to the user-rental expiry (step S505 YES), control unit 906 permits the content to be played back. In the event that the current time is later than the user-rental expiry (step S505, NO), control unit 906 prohibits playback of the content.

2.8 Modification (2)

In the above embodiments, broadcasting device 75 broadcasts a user-rental period in the form of broadcast wave. Alternatively, however, receiving/storing device 90 may acquire a user-rental period from billing device 80.

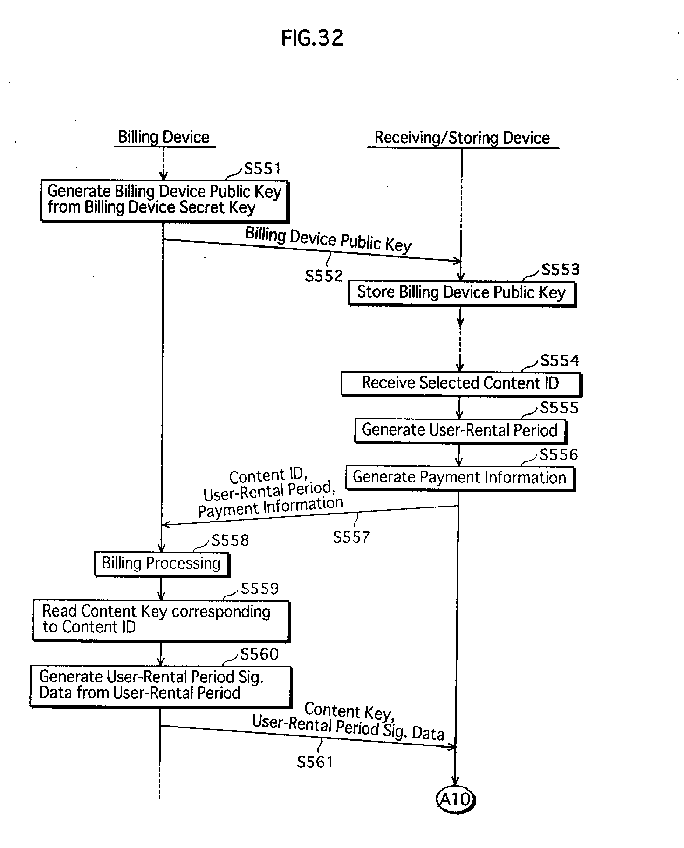

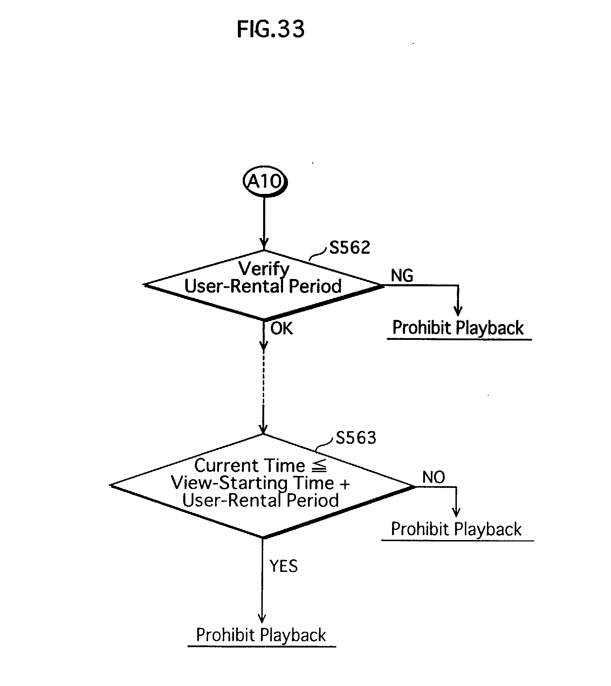

Here, with reference to the flowchart shown in FIGs. 32-33, description is given to the operations of billing device 80 and receiving/storing device 90 performed for the receiving/storing device 90 to acquire a user-rental period.

First, billing processing unit 802 of the billing device 80 generates a billing device public key from a billing device secret key that is know only to the billing device (step S551). Billing processing unit 802 then transmits the generated billing device public key to receiving/storing device 90 via Internet 5. In response, receiving/storing device 90 receives the billing device public key (step S552), and stores the received public key (step S553).

Next, receiving/storing device 90 receives from an end user a user-selected content ID (step S554) as well as a user-requested rental period, and then generates a user-rental period in accordance with the user request (step S555). Subsequently, receiving/storing device 90 generates payment information regarding payment for renting the content for the generated user-rental period (step S566), and transmits the payment information together with the content ID and the user-rental period to billing device 80 via Internet 5. In response, billing device 80 receives the content ID, user-rental period, and payment information from receiving/storing device 90 via Internet 5 (step S557).

Next, billing device 80 performs billing processing according to the received content ID, user-rental period and payment information (step S558), and reads a content key corresponding to the content ID (step S559). Billing device 80 then applies a digital signature algorithm to the user-rental period using the billing device secret key to generate rental period signature data (step S560), and transmits the read content key and the generated rental period signature data to receiving/storing device 90 via Internet 5. In response, receiving/storing device 90 receives the content key and the rental period signature data from billing device 80 via Internet 5 (step S561).

Receiving/storing device 90 applies a digital signature verification algorithm to the received rental period signature data and the user-rental period which has been generated by receiving/storing device 90 itself in order to verify whether the user-rental period has been altered (step S562). Having judged that the user-rental period is altered (step S562, NG), receiving/storing device 90 prohibits playback of the content (Step S562, NG).

On the other hand, having verified the authenticity of the user-rental period (step S562, OK), receiving/storing device 90 compares the acquired current time with the expiry of user-rental period starting from the view-starting time (step S563). In the event that the current time is equal or prior to the expiry of user-rental period (step S563, YES), receiving/storing device 90 permits the content to be played back.

On the other hand, in the event that the current time is later than the expiry (step S563, NO), receiving/storing device prohibits playback of the content.

3. OTHER EMBODIMENTS

Up to this point, the present invention has been described by way of the above embodiments. Yet, it goes without saying that the present invention is not limited to the specific embodiments disclosed above. The present invention also includes the following within its scope.

(1) In the step S206 described above, the message is transmitted to provider device 20. At this time, a rental agent identifier SID for identifying the rental agent may be transmitted together with the message to provider device 20. In this way, the provider is allowed to be informed of the rental agent that has attempted unauthorized use of the DVD.

To this end, at the time of providing a DVD to a rental agent, provider device 20 writes rental agent identifier SID identifying the rental agent in the provider-only area of the DVD. Further, in step S206, DVD player 40 reads rental agent identifier SID from the provider-only area of the DVD, and transmits the read rental agent identifier SID to provider device 20 along with the message.

(2) DVD player 40 may be connected to time source device 50 via a mobile phone network, and acquire current time from time source device 50.

Alternatively, time source device 50 may broadcast current time via a digital broadcast network. At this time, however, the current time is not accompanied with digital signature. Further, DVD player 40 may be provided with a tuner for receiving digital broadcast wave so as to be capable of receiving the current time broadcasted. Note that mutual authentication processing and key sharing processing shown in FIG. 15 are not performed in this case. In addition, current time is acquired without signature processing and verification processing that are shown in FIG. 16.

(3) In the above embodiments, description is given to a rental system including one rental agent. Nevertheless, the rental system may include a plurality of rental agents.

(4) In the above embodiments, manufacturer device 10 owned by the manufacturer generates user identifier IDi that identifying each user who owns a DVD player, and writes the generated user identifier IDi into the DVD player. However, the same may be done in any other manner. For example, a rental agent device owned by a rental agent may generate user identifier IDi, and write the generated user identifier IDi into the DVD player.

Further, manufacturer device 10 has been described to generate secret key SKi and write the generated secret key SKi into DVD player 40. One alternative is to write the generated secret key SKi into a removable, portable IC card. Then, the manufacturer may provide the IC card to a user at the time when the user earns a membership of the rental agent. When wanting to use DVD player 40, the user inserts the IC card into DVD player 40, so that DVD player 40 reads secret key SKi from the IC card.

At the time when the IC card is supplied from the manufacturer, the rental agent may write public key PKP, signature AUTHi onto the IC card using rental agent device 30, so that DVD player 40 reads public key PKP, signature AUTHi from the IC card.

Further, manufacturer device 10 and rental agent device 30 may write information into the IC card rather than the provider-only area of and the rental agent-only area of the DVD. In this case, DVD player 40 makes use of the information provided on the IC card.

(5) Note that examples of digital works include movies, music, moving pictures, still pictures, text data such as novels and theses, game software, computer programs, and database.

(6) In rental system 2, rental data has been described to be transmitted in the form of broadcast wave. Yet, broadcasting device 75 may transmit rental data and other information to receiving/storing device 90 via Internet 5, and receiving/storing device 90 may receive and store the rental data and other information.

(7) In the above embodiments, the current time, agent-rental expiry, user-rental period, and the like have been described as information representing a date in year, month, and day. Yet, the information may further include additional information representing such as hour, minute, and second.

(8) In rental system 2 in the above embodiment, providing device 70 transmits the agent-rental period to receiving/storing device 90 via broadcasting device 75. However, providing device 70 may transmit the agent-rental expiry to receiving/storing device 90 via Internet 5 rather than broadcasting device 75.

Also, in rental system 1 in the above embodiment, provider device 20 may transmit the agent-rental expiry to DVD player 40 via Internet 5.

(9) In rental system 1 in the above embodiment, manufacturer device 10 transmits signature AUTHi of provider device 20 corresponding to public key PKi for DVD player 40 in advance, so that DVD player 40 prestores signature AUTHi. Yet, the following alternative is possible.

At the time when a user purchases DVD player 40, or when the user plays back content for the very first time, DVD player 40 may go through initialization process that includes transmission of IDi and PKi to provider device 20 via Internet 5. In response, provider device 20 generates AUTHi, and transmits the generated AUTHi to DVD player 40 via Internet 5. DVD player 40 receives and stores the AUTHi.

In another alternative, AUTHi is not generated by provider device 20 but by another device.

To be more specific, AUTHi may be generated by a certification agent device which is owned by an agent independent all of the provider, rental agent, user, manufacturer, and time source agent (such an agent is generally referred to as "certificate authority" and Certicom corp. is one example) just in the manner as provider device 20, and then transmitted to DVD player 40 via Internet 5.

AUTHi generated by a certificate authority, which is independent of the provider, rental agent, user, manufacturer, and time source agent is advantageous in that such digital signature data is more reliable than AUTHi generated at a provider's end.

(10) Further, in rental system 1 in the above embodiment, DVD player 40 is described to have a unique secret key SKi, and performs mutual authentication with time source device 50 using that secret key SKi. However, the following alternative is applicable.

DVD player 40 is in possession of one common key that is common among predetermined type of DVD players of the same manufacture or of the same model. In addition, time source device 50 also has the same common key. Accordingly, mutual authentication between DVD player 40 and time source device 50 is performed using the common key by means of common key cryptography. In this case, however, the security level is lower than the one provided by rental system 1 in the above embodiment.

(11) The present invention may be embodied as methods comprising steps described above, or a computer program implementing the above methods by a computer, or even as digital signals representing the above computer program.

Further, the present invention may be embodied as a computer-readable medium storing the computer program or the digital signals. Here, the computer readable medium is, for example, a floppy disc, a hard disc, CD-ROM, MO, DVD, DVD-ROM, DVD-RAM, BD (Blu-ray Disc), or semiconductor memory. Alternatively, the present invention may be the computer program or the digital signals that are stored on such recording medium as above.

Further, the present invention may be embodied as the computer program or the digital signals transmitted via a network exemplified by telecommunications network, wired or wireless communications line, Internet, or the like.

Still further, the present invention may be embodied as a computer system provided with a microprocessor and memory that stores the above computer program, so that the microprocessor operates in accordance with the program.

Still further, the computer program or the digital signals may be recorded on any of the above recording medium and transported to another location. Alternatively, the computer program or the digital signals may be transmitted via any of the above networks. Thereafter, the computer program or the digital signals may be executed by another independent computer system.

(12) Further, the present invention may be embodied as combinations of the above modifications.

Although the present invention has been fully described by way of examples with reference to the accompanying drawings, it is to be noted that various changes and modifications will be apparent to those skilled in the art. Therefore, unless such changes and modifications depart from the scope of the present invention, they should be construed as being included therein.

## Claims

1. A playback device for acquiring and playing back a rented digital work from a rental agent to a user, comprising:

a time acquisition unit operable to acquire time information showing a reliable current time from a time source device;
an expiry acquisition unit operable to acquire user-expiry information showing an expiry time of a period during which the user is permitted by the rental agent to play back the digital work;
a comparison unit operable to compare the time shown by the acquired time information with the expiry time shown by the acquired user-expiry information; and
a prohibition unit operable to prohibit playback of the digital work when the time shown by the time information is later than the expiry time shown by the user-expiry information.

2. The playback device of Claim 1, wherein
the digital work is provided from a provider to the rental agent,
the expiry acquisition unit further acquires agent-expiry information showing an expiry time of a period during which the rental agent is permitted by the provider to rent the digital work,
the comparison unit further compares the time shown by the acquired time information with the expiry time shown by the acquired agent-expiry information, and
the prohibition unit prohibits playback of the digital work when the time shown by the time information is later than at least one of (i) the expiry time shown by the agent-expiry information, and (ii) the expiry time shown by the user-expiry information instead of when the time shown by the time information is later than the expiry time shown by the user-expiry information.

3. The playback device of Claim 1, wherein
a rental recording medium storing the digital work along with the user-expiry information is provided from the rental agent to the user,
the playback device acquires the digital work by reading the digital work from the rental recording medium,
the expiry acquisition unit acquires the user-expiry information by reading the user-expiry information from the rental recording medium, and
the prohibition unit prohibits playback of the digital work recorded on the rental recording medium.

4. The playback device of Claim 3, wherein
the rental recording medium is a provider recording medium onto which the user-expiry information is additionally recorded by the rental agent, the provider recording medium being provided from a provider to the rental agent and storing the digital work along with agent-expiry information showing an expiry time of a period during which the rental agent is permitted by the provider to rent the digital work,
the rental recording medium storing the digital work along with the agent-expiry information and the user-expiry information is provided from the rental agent to the user,

the expiry acquisition unit further acquires the agent expiry information by reading the agent expiry information from the rental recording medium,

the comparison unit further compares the time shown by the acquired time information with the expiry time shown by the acquired agent-expiry information, and

the prohibition unit prohibits playback of the digital work when the time shown by the time information is later than at least one of (i) the expiry time shown by the agent-expiry information, and (ii) the expiry time shown by the user-expiry information instead of when the time shown by the time information is later than the expiry time shown by the user-expiry information.

5. The playback device of Claim 1, wherein

the digital work is provided from the rental agent to the user along with the user-expiry information by being broadcasted in form of a broadcast wave,

the playback device acquires the digital work by receiving the broadcast wave, extracting the digital work from the received broadcast wave, and storing the extracted digital work,

the expiry acquisition unit acquires the user-expiry information by extracting the user-expiry information from the received broadcast wave, and

the control unit prohibits playback of the stored digital work.

6. The playback device of Claim 5, wherein

the digital work is provided from a provider to the rental agent along with agent-expiry information showing an expiry time of a period during which the rental agent is permitted by the provider to rent the digital work,

the digital work is provided from the rental agent to the user by the rental agent broadcasting the digital work along with the user-expiry information and the agent-expiry information,

the expiry acquisition unit further acquires the agent-expiry information by receiving the broadcast wave and extracting the agent-expiry information from the received broadcast wave,

the comparison unit further compares the time shown by the acquired time information with the expiry time shown by the acquired agent-expiry information, and

the prohibition unit prohibits playback of the digital work when the time shown by the time information is later than at least one of (i) the expiry time shown by the agent-expiry information, and (ii) the expiry time shown by the user-expiry information instead of when the time shown by the time information is later than the expiry time shown by the user-expiry information.

7. A provider device for use by a provider to provide a digital work to a rental agent, comprising:

an expiry generation unit operable to generate agent-expiry information showing an expiry time of a period during which the rental agent is permitted by the provider to rent the digital work; and

an output unit operable to output the digital work along with the generated agent-expiry information.

8. A rental agent device for use by a rental agent to rent a digital work to a user, comprising:

an expiry generation unit operable to generate user-expiry information showing an expiry time of a period during which the user is permitted by the rental agent to play back the digital work; and

an output unit operable to output the digital work along with the generated user-expiry information.

9. A rental system in which a provider provides a digital work to a rental agent, the rental agent rents the provided digital work to a user, and the user plays back the rented digital work, the system comprising:

a provider device that (i) generates agent-expiry information showing an expiry time of a period during which the rental agent is permitted by the provider to rent the digital work, and (ii) outputs the digital work along with the generated agent expiry information;

a rental agent device that (i) receives the digital work and the agent-expiry information, (ii) generates user-expiry information showing an expiry time of a period during which the user is permitted by the rental agent to play back the digital work, and (iii) outputs the received digital work and agent expiry information along with the generated user expiry information;

a time source device that acquires time information showing a reliable current time, and outputs the acquired time information; and

a playback device that (i) acquires the digital work form the rental agent device, (ii) acquires the time information from the time source device, (iii) acquires the agent-expiry information and the user-expiry information from the provider device and the rental agent device, respectively, (iv) compares the time shown by the accrued time information with the expiry time shown by the acquired agent-expiry information as well as with the expiry time shown by the acquired user-expiry information, and (v) prohibits playback of the acquired digital work when the time shown by the time information is later than the expiry time shown by the agent-expiry information or the expiry time shown by the user-expiry information.

**10.** A playback method for use by a playback device that acquires and plays back a rented digital work from a rental agent to a user, comprising:

a time acquisition step of acquiring time information showing a reliable current time from a time source device;
an expiry acquisition step of acquiring user-expiry information showing an expiry time of a period during which the user is permitted by the rental agent to play back the digital work;
a comparison step of comparing the time shown by the acquired time information with the expiry time shown by the acquired user-expiry information; and
a prohibition step of prohibiting playback of the digital work when the time shown by the time information is later than the expiry time shown by the user-expiry information.

**11.** A playback program for use by a computer that acquires and plays back a rented digital work from a rental agent to a user, comprising:

a time acquisition step of acquiring time information showing a reliable current time from a time source device;
an expiry acquisition step of acquiring user-expiry information showing an expiry time of a period during which the user is permitted by the rental agent to play back the digital work;
a comparison step of comparing the time shown by the acquired time information with the expiry time shown by the acquired user-expiry information; and
a prohibition step of prohibiting playback of the digital work when the time shown by the time information is later than the expiry time shown by the user-expiry information.

**12.** A computer-readable recording medium storing a playback program for use by a computer that acquires and plays back a rented digital work from a rental agent to a user, the playback program comprising:

a time acquisition step of acquiring time information showing a reliable current time from a time source device;
an expiry acquisition step of acquiring user-expiry information showing an expiry time of a period during which the user is permitted by the rental agent to play back the digital work;

a comparison step of comparing the time shown by the acquired time information with the expiry time shown by the acquired user-expiry information; and
a prohibition step of prohibiting playback of the digital work when the time shown by the time information is later than the expiry time shown by the user-expiry information.

FIG.1

1 Rental System

# FIG.2

**20   Provider Device**

- 202 Input Unit
- 203 Display Unit
- 209 Information Storage Unit
  - SKP
  - PKP
  - END2
  - AUTHi
  - PKS
  - SD0
  - SD1
- 201 Control Unit
- 208 Transmitting/ Receiving Unit
- 207 Content Storage Unit
  - CNT
- 206 Access Unit
- 61 DVD

EP 1 265 238 A2

# FIG.3

61 DVD

| Provider-Only Area | END2 |
| | SD0 |
| | SD1 |
| Rental Agent-Only Area | |
| Free-Access Area | CNT |

# FIG.4

30 Rental Agent Device

302 Input Unit

303 Display Unit

304 Information Storage Unit
- SKS
- PKS

301 Control Unit

305 Access Unit

306 Transmitting/ Receiving Unit

62 DVD

Internet

EP 1 265 238 A2

# FIG.5

62  DVD

| Provider-Only Area | END2 |
| | SD0 |
| | SD1 |
| Rental Agent-Only Area | END1 |
| | SD2 |
| Free-Access Area | CNT |
| | PKS |

## FIG.6

40 DVD Player

**402** Authentication Unit

**407** Input Unit

**408** Display Unit

Internet

**403** Transmitting/ Receiving Unit

**401** Control Unit

**404** Access Unit

**62** DVD

**405** Information Storage Unit

| PKP |
| --- |
| PKT |
| SKi |
| AUTHi |
| IDi |
| OLD |

**406** Playback Unit

**41** Monitor

**42** Speaker

EP 1 265 238 A2

# FIG.7

50 Time Source Device

503 Authentication Unit

502 Current Time Generating Unit

501 Control Unit

504 Transmitting/ Receiving Unit

Internet

505 Information Storage Unit

| PKT |
| --- |
| SKT |
| PKP |
| PKi |

EP 1 265 238 A2

# FIG.8

```
┌─────────────────────────────────────────────┐
│     Start Manufacturer Device Processing      │
└─────────────────────────────────────────────┘
                      │
                      ▼                        S101
┌─────────────────────────────────────────────┐
│          Generate User i's identifier IDi     │
└─────────────────────────────────────────────┘
                      │
                      ▼                        S102
┌─────────────────────────────────────────────┐
│          Generate User i's Secret Key SKi     │
└─────────────────────────────────────────────┘
                      │
                      ▼                        S103
┌─────────────────────────────────────────────┐
│           Write IDi and SKi into Information   │
│            Storage Unit of DVD Player          │
└─────────────────────────────────────────────┘
                      │
                      ▼                        S104
┌─────────────────────────────────────────────┐
│      Generate User i's Public Key PKi from SKi │
└─────────────────────────────────────────────┘
                      │
                      ▼                        S105
┌─────────────────────────────────────────────┐
│           Transmit PKi to Provider Device      │
└─────────────────────────────────────────────┘
                      │
                      ▼                        S106
┌─────────────────────────────────────────────┐
│        Receive Public Key PKP, Signature       │
│          AUTHi from Provider Device            │
└─────────────────────────────────────────────┘
                      │
                      ▼                        S107
┌─────────────────────────────────────────────┐
│         Write PKP, AUTHi into Information       │
│           Storage Device of DVD Player         │
└─────────────────────────────────────────────┘
                      │
                      ▼
              ┌───────────────┐
              │     STOP       │
              └───────────────┘
```

# FIG.9

Start Provider Device Processing

S121

Generate Provider Secret Key SKP

S122

Generate Provider Public Key PKP from SKP
and Transmit PKP to Manufacturer Device

S123

Receive User i's Public Key PKi from Manufacturer Device

S124

Generate Signature AUTHi
corresponding to PKi using SKP
"AUTHi=SIG(SKP, PKi)"

S125

Transmit AUTHi to Manufacturer Device

S126

Receive and Store Rental Agent Public Key PKS

A1

# FIG.10

A1

S127
Generate Signature SD1
corresponding to PKS using SKP
"SD1=SIG(SKP, PKS)"

S128
Read Content CNT

S129
Generate Agent-Rental Expiry END2

S130
Generate Signature SD0
corresponding to END2 using SKP
"SD0=SIG(SKP, END2)"

S131
Write END2, SD0, SD1 into Provider-Only Area of DVD

S132
Write Content CNT into Free-Access Area of DVD

EP 1 265 238 A2

# FIG.11

Start Rental Agent Device Processing

**S151** — Generate Rental Agent Secret Key SKS

**S152** — Generate Rental Agent Public Key PKS from SKS

**S153** — Transmit PKS to Provider Device

**S154** — Generate User-Rental Expiry END1

**S155** — Generate Signature SD2 corresponding to END1 using SKS "SD2=SIG(SKS, END1)"

**S156** — Write SD2, END1 into Rental Agent-Only Area of DVD

**S157** — Write PKS into Free-Access Area of DVD

# FIG.12

Start DVD Player Processing

↓ S171

Mutual Authentication with Time Source Device

↓ S172

Authentication Succeeded? — NO → STOP

↓ YES

S173

Receive Public Key PKT from Time Source Device

↓ S174

Write PKT into Information Storage Unit

↓ S175

Receive Playback Instruction? — NO → Other Processing S177

↓ YES S176

Playback Processing

# FIG.13

```
        ( Start Playback Processing by DVD Player )
                         │  S190
            ┌────────────────────────────────┐
            │ Mutual Authentication and Key  │
            │ Sharing with Time Source Device│
            └────────────────────────────────┘
                         │  S191
                    ◇ Authentication ◇ ──── NG ────┐
                    ◇  Succeeded?   ◇              │  S201
                         │ OK   S192        ┌─────────────────────┐
            ┌────────────────────────┐      │ Display "Authentication│
            │  Verify Signature Data │      │  Failed" Message     │
            └────────────────────────┘      └─────────────────────┘
                         │  S193                   │
            ┌────────────────────────┐        ( RETURN )
            │    Acquire Current     │
            │       Time NOW         │
            └────────────────────────┘
                         │  S194
                    ◇  Acquisition  ◇ ──── NO ────┐
                    ◇  Succeeded?   ◇             │  S202
                         │ YES  S195       ┌─────────────────────┐
            ┌────────────────────────┐     │ Display "Current Time│
            │   Read Prior Time OLD  │     │ Acquisition Failed" Message│
            └────────────────────────┘     └─────────────────────┘
                         │  S196                  │
                    ◇  OLD < NOW  ◇ ──── NO ────┐  ( RETURN )
                         │ YES               │  S203
                         │            ┌─────────────────────┐
                         │            │ Display "OLD and NOW are in│
                         │            │ Abnormal Relation" Message│
                         │            └─────────────────────┘
                         │  S197            │
                    ◇ NOW < END1 ◇ ── NO ──┐  ( RETURN )
                         │ YES          │  S204
                       ( A2 )    ┌─────────────────────┐
                                 │ Display "User-Rental Period│
                                 │   Expired" Message  │
                                 └─────────────────────┘
                                        │
                                    ( RETURN )
```

EP 1 265 238 A2

## FIG.14

A2

S198

NOW < END2

**NO** → S205

Display "Agent-Rental Period Expired" Message

S206

Transmit Displayed Information to Provider Device

RETURN

**YES**

S199

Overwrite Prior Time OLD with Current Time NOW

S200

Play Back Content

RETURN

# FIG.15

## Mutual Authentication Processing

| DVD Player | Time Source Device |
|---|---|

Read AUTHi — S221

S222 — AUTHi

VERIFY(PKP, AUTHi, PKi) — S223

OK

Generate Random No. R1 — S224

S225 — R1

Signature RESP1=SIG(SKi, R1) — S226

RESP1 — S227

VERIFY(PKi, RESP1, R1) — S228

OK

S229

Generate Random No. R2

R2 — S230

Signature RESP2=SIG(SKT, R2) — S231

S232 — RESP2

VERIFY(PKT, RESP2, R2) — S233

OK

Generate Session Key K — S234

EK=ENC(PKT, K) — S235

EK — S236

K=DEC(K, EK) — S237

# FIG.16

**Acquisition of Current Time NOW**

DVD Player                    Time Source Device

S251
Read IDi

S252
IDi

S253
Acquire Current Time NOW

S254
TIMEi=IDi+NOW

S255
Signature TIMESIG=SID(SKT, TIMEi)

NOW,TIMESIG

S256

TIMEi'=IDi+NOW

S257

VERIFY(PKT, TIMESIG, TIMEi')

S258

FIG.17

```
        ┌─────────────────────────────────────┐
        │  Start Signature Data Verification  │
        └─────────────────────────────────────┘
                         │
                         ▼        S271
                    ◇─────────────◇        NG
                    │ Verify END2 │──────────────────┐
                    ◇─────────────◇                  │
                         │ OK                         │
                         ▼        S272                │
                    ◇─────────────◇        NG         │
                    │ Verify PKS  │──────────────────►│
                    ◇─────────────◇                  │
                         │ OK                         │
                         ▼        S273                │
                    ◇─────────────◇        NG         │
                    │ Verify END1 │──────────────────►│
                    ◇─────────────◇                  │
                         │ OK                         ▼
                         ▼                       ┌─────────┐
                    ┌─────────┐                  │  STOP   │
                    │ RETURN  │                  └─────────┘
                    └─────────┘
```

## FIG.18

Communications Satellite — 77

76

78

Providing Device — 70

71

Broadcasting Device — 75

Receiving/Storing Device — 90

Monitor — 91

Internet — 5

Time Source Device — 85

Billing Device — 80

2 Rental System

EP 1 265 238 A2

## FIG.19

Providing Device

Information Storage Unit — 701

- Provider Public Key — 711
- 712

Supply Data
| | |
|---|---|
| Provider ID | — 721 |
| Content ID | — 722 |
| Content Title | — 723 |
| Content | — 724 |
| Agent-Rental Expiry | — 725 |

- Provider Signature Data — 713

Input Unit — 702

Display Unit — 703

Control Unit — 704

Transmitting/Receiving Unit — 705 → To Broadcasting Device

Transmitting/Receiving Unit → To Internet
707

Key Storage Unit — 706
- Provider Secret Key — 714

70

EP 1 265 238 A2

## FIG.20

Information Storage Unit

| Time Source Device Public Key | 761 |
| Rental Agent Public Key | 762 |
| Provider Public Key | 763 |

764
767

Rental Data / Supply Data

| Rental Agent ID | 771 |
| Provider ID | 772 |
| Content ID | 773 |
| Content Title | 774 |
| Content | 775 |
| Agent-Rental Expiry | 776 |
| User-Rental Period | 777 |
| Rental Fee | 778 |

| Provider Signature Data | 765 |
| Rental Agent Signature Data | 766 |

To Providing Device

751
752  Transmitting/Receiving Unit

753  Key Storage Unit
768  Rental Agent Secret Key

754  Control Unit
755  Transmitting Unit
758  Transmitting/Receiving Unit

756  Input Unit
757  Display Unit

76

To Internet

Broadcasting Device

75

EP 1 265 238 A2

FIG.21

EP 1 265 238 A2

# FIG.22

Key Storage Unit — 853

Time Source Device Secret Key — 864

852 — Time Generating Unit

854 — Transmitting/Receiving Unit — To Internet

851

Information Storage Unit

855 — Control Unit

Current Time — 861

Current Time Signature Data — 862

Current Time Public Key — 863

Time Source Device

85

EP 1 265 238 A2

FIG.23

78

Monitor ~91    90

901

Playback Unit

908

902

Receiving Unit

915

916

903

Receiving Unit

905

Input Unit

904

To Internet

Control Unit

906

Transmitting/Receiving
Unit

907

Key Storage Unit

Recipient Secret Key ~941

Receiving/Storing Device

### Information Storage Unit

| | | |
|---|---|---|
| Time Source Device Public Key | | ~911 |
| Rental Agent Public Key | | ~912 |
| Provider Public Key | | ~913 |
| Recipient Public Key | | ~914 |

| Rental Data | Supply Data | | |
|---|---|---|---|
| | | Rental Agent ID | ~931 |
| | | Provider ID | ~932 |
| | | Content ID | ~933 |
| | | Content Title | ~934 |
| | | Content | ~935 |
| | | Agent-Rental Expiry | ~936 |
| | User-Rental Period | | ~937 |
| | Rental Fee | | ~938 |

| | |
|---|---|
| Provider Signature Data | ~917 |
| Rental Agent Signature Data | ~918 |
| View-Starting Time | ~919 |
| View-Starting Time Signature Data | ~920 |
| Current Time | ~921 |
| Current Time Signature Data | ~922 |

EP 1 265 238 A2

## FIG.24

**Providing Device**

S301
Generate Provider Public Key from Provider Secret Key

**Broadcasting Device**

Provider Public Key  S302

Receiving/
Storing
Device

S303

S304
Read Provider ID, Content ID, Content Title, Content

S305
Generate Agent-Rental Expiry

S306
Generate Provider Signature Data corresponding
to Agent-Rental Expiry using Supply Data

**Broadcasting Device**

Supply Data, Provider Signature Data

S307

STOP

# FIG.25

**Providing Device**          **Broadcasting Device**

Provider Public Key  S302

S321
Store Provider Public Key

Supply Data,
Provider Signature Data

S307                S322
Store Supply Data, Provider Signature Data

S323
Verify
Agent-Rental Expiry          NG

**Time Source Device**

S331              OK    S324
Output Current Time ←→ Acquire Current Time

S325
Current Time ≦
Agent-Rental Expiry ?          NO

YES    S326
Generate User-Rental Period

S327                S330
Generate Rental Fee

S328
Generate Rental Agent Signature Data
corresponding to User-Rental Period from
Rental Data

Display"No Data
is Permitted"
Message

**Receiving/
Storing
Device**

Rental Data, Provider Sig. Data,
Rental Agent Sig. Data

S329

## FIG.26

Broadcasting Device

Receiving/Storing Device

Rental Data, Provider Sig. Data,
Rental Agent Sig. Data

S329

S351

Store Rental Data, Provider Signature Data,
Rental Agent Signature Data

S352

Read Content Title, Content ID

S353

Display Content Title, Content ID

S354

Receive Selected Content ID

S355

Generate Payment Information

Billing Device

Payment Information, Content ID

S356

S357

Billing Processing

S358

Read Content Key
corresponding to
Content ID

Content Key

S359

# FIG.27

Receiving/Storing Device

Time Source Device

A4 ──→ Receive Playback Instruction ⟋S371

Acquire Current Time ⟋S372 ←──→ Output Current Time ⟋S377

Verify Agent-Rental Expiry ⟋S373

NG

OK

Current Time ≦ Agent Rental Expiry ⟋S374

NO

YES

S376
Display "Playback of Content is not Permitted" Message

First Playback? ⟋S375

YES

NO

A1

A2

A3

# FIG.28

EP 1 265 238 A2

# FIG.29

Processing for User-Period Extension

```
        (A5)                           Billing Device
         │                                   │
         ↓        S411                       ↓        S415
  ┌──────────────────┐              ┌──────────────────┐
  │ Payment Processing │◄──────────►│ Billing Processing │
  └──────────────────┘              └──────────────────┘
         │        S412                       │
         ↓                                   ┆
  ┌─────────────────────────────┐
  │ Current Time → View-Starting Time │
  └─────────────────────────────┘
         │        S413
         ↓
 ┌───────────────────────────────────────────┐
 │ Generate View-Starting Time Sig. Data to Update │
 └───────────────────────────────────────────┘
         │        S414
         ↓
  ┌─────────────────────────┐
  │ Encrypt Content to Play Back │
  └─────────────────────────┘
         │
         ↓
        (A4)
```

# FIG.30

Time Source Device          Broadcasting Device

S431

Generate Time Source Device
Public Key

Time Source Device Public Key

S432

S433

Store Time Source Device Public Key

Request Current Time

S435     S434

Acquire Current Time

S436

Generate Current Time Sig.
Data from Current Time

Current Time,
Current Time Sig. Data

S437

S438

Verify Current
Time     NG

OK     STOP

# FIG.31

Broadcasting Device       Receiving/Storing Device

S501

Generate User-Rental Period

S502

Generate User-Rental Period Sig. Data

User-Rental Period, User-Rental Period Sig. Data

S503

S504

Verify User-Rental Period   NG → Prohibit Playback

OK

S505

Current Time ≦ User-Rental Period?   NO → Prohibit Playback

YES

Prohibit Playback

## FIG.32

Billing Device            Receiving/Storing Device

S551
Generate Billing Device Public Key
from Billing Device Secret Key

Billing Device Public Key

S552

S553
Store Billing Device Public Key

S554
Receive Selected Content ID

S555
Generate User-Rental Period

S556
Generate Payment Information

Content ID,
User-Rental Period,
Payment Information

S557

S558
Billing Processing

S559
Read Content Key corresponding
to Content ID

S560
Generate User-Rental Period Sig.
Data from User-Rental Period

Content Key,
User-Rental Period Sig. Data

S561

(A10)

# FIG.33

A10

S562
Verify
User-Rental Period — NG → Prohibit Playback

OK

S563
Current Time $\leqq$
View-Starting Time +
User-Rental Period — NO → Prohibit Playback

YES

Prohibit Playback